# EUROPEAN PATENT SPECIFICATION

(11) **EP 3 207 631 B1**
(45) Date of publication and mention of the grant of the patent: **29.01.2020**
(21) Application number: 15784865.6
(22) Date of filing: 08.10.2015
(51) Int. Cl.: H02S 20/23, H02S 20/25

(54) **BASE PLATE FOR PHOTOVOLTAIC MODULE**
GRUNDPLATTE FÜR EIN PHOTOVOLTAIKMODUL
PLAQUE DE BASE POUR MODULE PHOTOVOLTAÏQUE

(30) Priority: 14.10.2014 US 201462063604 P
(43) Date of publication of application: 23.08.2017
(73) Proprietor: Dow Global Technologies LLC, Midland, MI 48674 (US)
(72) Inventor: KAUFFMANN, Keith, L., Ypsilanti, MI 48197 (US); LOPEZ, Leonardo, C., Midland, MI 48640 (US); EURICH, Gerald, K., Merrill, MI 48637 (US); KELLEHER, Patrick, M., Missouri City, TX 77459 (US); LANGMAID, Joseph, A., Caro, MI 48723 (US); LUX, Mark, J., Midland, MI 48640 (US); NAMJOSHI, Abhijit, A., Midland, MI 48674 (US); SCHUETTE, Chad, V., Freeland, MI 48623 (US); STEMPKI, Matthew, A., Midland, MI 48640 (US); TUDOR, Jay, M., Goodrich, MI 48438 (US); YANG, Kwanho, Midland, Michigan 48674 (US)
(74) Representative: Lloyd, Robin
(86) International application number: PCT/US2015/054636
(87) International publication number: WO 2016/060924

(56) References cited:
- EP-A2- 2 009 704
- WO-A1-2011/157967
- WO-A1-2014/193542
- JP-A- 2000 226 908
- US-A1- 2006 266 405
- US-A1- 2011 179 727
- US-A1- 2013 000 229

## Description

### FIELD

The present teachings generally relate to an improved photovoltaic module including a base plate and a photovoltaic laminate which are two discrete pieces that work individually and are connected together.

### BACKGROUND

Typically, photovoltaic arrays are placed in an elevated location such as a roof top of a home or a building or in a rack and frame that elevates the photovoltaic array so that the photovoltaic array is exposed to sunlight. The roofs on homes and/or buildings generally are formed by adding a plurality of pieces of panels together so that a generally contiguous surface is formed, which are supported by one or more trusses. Photovoltaic modules may be secured to the plurality of pieces of panels directly and/or indirectly via a connection structure such as a rack and frame. Each photovoltaic module of the photovoltaic array may include only an active portion and the active portions of two or more photovoltaic modules may be placed in close proximity with one another so that a photovoltaic array is formed over and/or on the connection structure. However, in cases where the photovoltaic modules provide roofing functions, the photovoltaic modules may include both an active portion and a support portion and the active portion of one photovoltaic module may fully and/or partially cover the support portion of an adjacent photovoltaic module to replace the framing and racking structure. Further, the active portion and the support portion are one integrally formed piece with the photovoltaic active portion located within the active portion so that in order to remove the photovoltaic active portion the entire photovoltaic module would be removed and replaced if necessary. In cases of building integrated photovoltaics, the support portion may provide roofing functions or structural functions for subsequent photovoltaic modules. The support portion of the photovoltaic module may warp and/or curl after manufacture so that when the photovoltaic module is placed on a support structure the support portion does not form a flat connection with the support structure. Typically, as the size of the photovoltaic module is increased the size of the support portion increases, which results in an increase in the amount of warp that is experienced by each photovoltaic module; therefore, current photovoltaic modules may be limited in size to reduce the warp and/or curl of the photovoltaic module. Further, when the active portion is placed over the support portion, the support portion may not lay flat due to the warp of the support portion so that when mass is placed on the active portion the active portion may be deformed and/or damaged due to the warp of the support portion placing an uneven amount of pressure on the active portion.

Additionally, the support structures of a roof may not have consistent flatness or strength due to variations in fabrication and/or age of the roof, and the shape of the roof may vary over time due to movement and/or aging of the foundation and/or roofing structure. At some point over the life of the photovoltaic array, the home owner, a repair person, an installer, or a combination thereof may be required to walk across the photovoltaic array. As the individual walks across the photovoltaic array, each individual photovoltaic module may bend and flex due to the variations in strength and/or flatness of the support structures, which may result in the photovoltaic module bending enough so that the photovoltaic module is damaged. The warp and/or curl of the support portion may exacerbate the bending of the photovoltaic module and/or form a pressure point. It would be attractive to have a photovoltaic module which is resistant to warping and/or curl, is sufficiently compliant to the irregularities of the roof support structure, and lies flat so that the active portion is supported by the support portion.

Examples of some photovoltaic modules may be found in U.S. Patent No. 5,437,735; 6,106,752; 7,870,691; 7,985,919; 8,631,614; U.S. Patent Application Publication No. 2008/0271773; 2008/0302030; 2010/0180523; and International Patent Application No. WO2011/019886. JP 2000-226908 A discloses a roof tile with solar battery, as known in the prior art.

It would be attractive to have a device that has a support portion that is substantially planar and free of any warped portions, curled portions, or both. It would be attractive to have a support portion of the photovoltaic module that provides the necessary structural properties to provide a uniform support structure for subsequent photovoltaic module's active portions and is easily manufactured with a polymeric construction having a thin, light, low cost, and dimensionally stable construction so that the photovoltaic module generally remains planar and is free of warp. What is needed is a photovoltaic module where the photovoltaic active portion can be removed from a base portion and the base portion maintain the roofing functions of the photovoltaic module. What is needed is a photovoltaic module where the photovoltaic active portion can be removed from a base portion and changed with another photovoltaic active portion.

### SUMMARY

The subject matter of the present invention is defined in claim 1. The present teachings meet one or more of the present needs by providing: a photovoltaic module comprising: a base plate and a photovoltaic laminate that are connected together; wherein the photovoltaic module is configured to be directly connected to a roofing structure and provide roofing functions, and wherein the photovoltaic laminate is removable from the base plate without damaging the base plate and the base plate retains its roofing functions when the photovoltaic laminate is removed.

The teachings herein surprisingly solve one or more of these problems by providing a device that has a support portion that is substantially planar and free of any warped portions, curled portions, or both. The teachings herein provide a support portion of the photovoltaic module that provides the necessary structural properties to provide a uniform strong support structure for subsequent photovoltaic module's active portions and is easily manufactured with a polymeric construction having a thin, light, low cost, and dimensionally stable construction so that the photovoltaic module remains planar and is free of warp. The teachings herein provide a photovoltaic module where the photovoltaic active portion can be removed from a base portion and the base portion maintains the roofing functions of the photovoltaic module. The teachings herein provide a photovoltaic module where the photovoltaic active portion can be removed from a base portion and changed with another photovoltaic active portion.

### BRIEF DESCRIPTION OF THE DRAWINGS

FIG. 1 illustrates a top perspective view of a photovoltaic module overlapping a pair of adjacent photovoltaic modules;
FIG. 2 illustrates a bottom view of a base plate;
FIG. 3 illustrates a bottom view of the overlapped photovoltaic modules of FIG. 1;
FIG. 3A illustrates a close-up view of a bottom of a connection recess;
FIG. 3B illustrates a close-up view of a connection hook;
FIG. 3C illustrates a close-up view of a connection between the connection hook and connection recess;
FIG. 4A illustrates a cross-sectional view of two overlapped photovoltaic modules of FIG. 1 cut along line 4A-4A;
FIG. 4B illustrates a close up view of a top of a connection recess;
FIG. 5A is a top view of a base plate;
FIG. 5B illustrates a close up view of a locking feature;
FIG. 6 is a top view of a photovoltaic module;
FIG. 6A is a close up view of a plate connector;
FIG. 6B is a bottom perspective view of an angled connector;
FIG. 7 is a side view of a locking feature connecting a photovoltaic laminate to a base plate;
FIG. 8 illustrates a side view of a locking feature connected to a photovoltaic laminate to a base plate;
FIG. 9 illustrates a perspective view of another photovoltaic module;
FIG. 10 illustrates a cross-sectional view of FIG. 9 cut along line 10-10;
FIG. 11 illustrates a cross-sectional view of FIG. 9 cut along line 11-11;
FIG. 12 illustrates a side view of FIG. 9;
FIG. 13 illustrates a base plate;
FIG. 13A illustrates a bottom perspective view of an angled connector;
FIG. 13B illustrates a top view of the angled connector of FIG. 13A;
FIG. 14 illustrates a side view of a photovoltaic module including a connector;
FIG. 15 illustrates a side view of a photovoltaic module including another connector;
FIG. 16 illustrates a perspective view of a photovoltaic module;
FIG. 17 illustrates an exploded view of a connection device shown in transparent of FIG. 16;
FIG. 18 illustrates an end view of an edge channel of FIG. 16;
FIG. 19 illustrates a close-up view of a connector channel of FIG. 16 including a connector; and
FIG. 20 illustrates a close-up view of a connector channel of FIG. 16 with the pv laminate removed.

### DETAILED DESCRIPTION

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

A plurality of photovoltaic modules of the teachings herein are combined together to form a photovoltaic array. The photovoltaic array collects sunlight and converts the sunlight to electricity. Generally, each of the photovoltaic modules may be individually placed in a structure that houses all of the photovoltaic modules forming all or a portion of a photovoltaic array. The photovoltaic modules of the teachings herein may be used with a housing that contains all of the individual photovoltaic modules and make up a photovoltaic array. Preferably, the photovoltaic array taught herein is free of a separate structure that houses all of the photovoltaic modules that make up a photovoltaic array (also referred to as a solar array). More preferably, each individual photovoltaic module may be connected directly to a structure (i.e., is a building integrated photovoltaic (BIPV)) and each of the individual photovoltaic modules is electrically connected together so that a photovoltaic array is formed. Most preferably, each individual photovoltaic module may include a base plate, interconnection wiring and a photovoltaic laminate. Each base plate may include a support portion, an active portion, and an overlap portion. The active portion may overlap all or a portion of one or more adjacent photovoltaic modules (e.g., the overlap portion) forming a "double overlap" so that each photovoltaic module may be protected and connected to a connection surface and/or so that the combined photovoltaic modules may form a shingle structure for diverting fluids from the roof of the structure. Each of the photovoltaic modules may have a portion that may be indirectly and/or directly connected to a connection surface. The base plate may directly connect to a connection surface and the photovoltaic laminate may be connected to a support portion of the base plate (i.e., the photovoltaic laminate may be indirectly connected to the connection surface). Preferably, the overlap portion of each of the photovoltaic modules may be directly connected to a connection surface, and the active portion may be connected directly to the overlap portion or directly to the connection surface by a fastener that extends through the overlap portion, around the overlap portion, through a fastener support in the overlap portion, or a combination thereof. More preferably, each of the photovoltaic modules may include a base plate and a photovoltaic laminate and the base plate is connected to a connection surface by one or more fasteners that extend through fastener supports and preferably a plurality of fasteners that extend through fastener supports.

The fastener supports may be located within the active portion, the overlap portion, the support portion, or a combination thereof. Preferably, the fastener supports may be located within the overlap portion. The fastener supports may be a through hole that extends through the overlap portion, a weakened area so that a fastener may be placed through the fastener support, a removable portion, a punch out, an area of lower hardness, or a combination thereof. Preferably, the fastener supports may be a region where the base plate is reinforced so that fasteners may extend through and connect the photovoltaic module, the base plate, or both to the one or more connection surfaces and the fasteners do not damage the photovoltaic laminate when the base plate, the overlap portion, or both is subjected to movement. The fastener supports may be at any location so that the photovoltaic module may be connected to an overlap portion, a connection surface, or both without damaging the active portion, the photovoltaic laminate, or both. A plurality of fastener supports may extend across the width of the base plate. The base plate may have two or more, four or more, six or more, eight or more, or even ten or more fastener supports. The fastener supports may be located at a region proximate to the support portion. The fastener supports may be located on the sides of a connection recess. For example, a connection recess may be located between a pair of fastener supports so that the connection recesses and base plate are fixedly connected to a connection surface. The base plate may have one or more fastener supports that extend through the support portion so that the photovoltaic module may be connected to one or more connection surfaces. The one or more fastener supports and preferably a plurality of fastener supports may be located in the support portion, the overlap portion, or both of the base plate. The one or more fastener supports may be located proximate to one or more alternative fastener supports. The one or more alternative fastener supports may function to provide an alternative connection location in the event the fastener support aligns with a crack, a recess, a seam, cannot be used to form a connection, or a combination thereof. The one or more alternative fastener supports may be located proximate to and spaced apart from the fastener supports. The one or more alternative fastener supports may be located about 5 mm or more, about 10 mm or more, about 2 cm or more, or even about 5 cm or more from the fastener supports. The one or more alternative fastener supports may be located about 15 cm or less, about 12 cm or less, about 10 cm or less, or even about 7 cm or less from the fastener supports. Preferably, a plurality of fastener supports are located within the overlap portion of the base plate proximate to the support portion.

The connection surface may function to provide support to one or more photovoltaic modules so that a photovoltaic array is formed. The connection surface may be a support structure such as a housing for containing one or more of the photovoltaic modules. Preferably, the connection surface may be a roof. The roof may be made of any material that has sufficient strength to support the weight of the plurality of photovoltaic modules. The roof may be made of any material so that the plurality of photovoltaic modules may be directly connected to the roof. The roof may be comprised of a plurality of panels made of wood, plywood, structural plywood, decorative plywood, overlaid plywood, commercial plywood, utility plywood, marine plywood, medium density fiberboard (MDF), oriented strand board (OSB), Sundela, hardboard, insulation board, the like, or a combination thereof. Alternately, the connection surface may be a series of structural components which do not form a continuous roof surface, such as in the case of a batten type roof structure. The plurality of photovoltaic modules may be connected to the connection surface so that the photovoltaic modules are adjacent to one another. For example, an edge of one photovoltaic module may be located substantially proximate to an edge of an adjoining photovoltaic module. Preferably, the photovoltaic modules may partially overlap each other. For example, the active portion and/or a support portion of one photovoltaic module may overlap an overlap portion of one or more adjacent photovoltaic modules in a similar fashion to how roofing shingles are applied to a roof. Preferably, a support portion of a base plate of one photovoltaic module may extend at least partially over an overlap portion of an adjacent base plate. Each of the base plates may include one or more fastener supports that may connect the base plate to a connection surface.

The plurality of photovoltaic modules and preferably each of the base plates may be connected to the connection surface by any fastener that has sufficient strength to withstand environmental conditions and form a secure connection. The plurality of base plates may be connected to a connection surface with a mechanical fastener, an adhesive, an interlocking connection with an adjacent photovoltaic module, or a combination thereof. The fasteners may be a screw, nail, bolt, staple, rivet, or a combination thereof. The adhesive may be any adhesive with sufficient strength to connect the photovoltaic module to the connection surface. The adhesive may be epoxy based, silicone based, acrylic based, a urethane based, a polyamide based, a one part adhesive, a multi-part adhesive, a natural adhesive, a synthetic adhesive, or a combination thereof. The fastener may be a combination of a mechanical fastener and an adhesive fastener. For example, pv laminate may be connected with an adhesive that is located between the pv laminate and the base plate and the edges may be secured with a screw that connects a connection device which extends over an edge of the pv laminate and the base plate. Preferably, if an adhesive fastener is used, the connection formed by the adhesive may be broken without damaging the pv laminate, the base plate, or preferably both. An adhesive fastener may be used to connect the pv laminate to the base plate although this is not preferred as the adhesive may damage the pv laminate, the base plate, or both upon removal of the pv laminate from the base plate. The connection may be a permanent connection, a removable connection, or both so that a photovoltaic module is connected to a connection surface. The photovoltaic modules, base plate, or both may be insulative such that the photovoltaic modules are free of a ground wire. The photovoltaic modules may be lightweight and have a low profile so that the photovoltaic modules may be connected directly to the connection surface by the fastener supports, the alternative fastener supports, or both as are discussed herein.

The base plate may function to provide roofing functions. The base plate may function to connect a photovoltaic laminate (hereinafter pv laminate) to a connection surface (e.g., a roof). The base plate may function to allow for decoupled expansion and contraction of the pv laminate relative to the base plate or vice versa. The base plate may function to allow for removal, replacement, repair, or a combination thereof of the pv laminate without removal of the entire pv module from the connection surface. The base plate may function to protect all or a portion of the pv laminate. The base plate may connect the pv laminate to a connection surface. The base plate may protect one or more connectors and or wiring. The base plate may retain roofing functions, fire retardant properties, or both when the pv laminate is removed from the base plate. Preferably, the base plate may retain adequate fire retardant properties. The base plate may include one or more features to assist in forming a connection with one or more connection devices. The base plate may include one or more devices that receive a portion of a fastener, assist in forming a connection, or both. The base plate may include one or more bosses.

The one or more bosses may function to receive one or more fasteners, connect to one or more connection devices, or both. The one or more bosses may include a through hole. The one or more bosses may be a reinforced portion of the base plate. The one or more bosses may extend from an edge of the base plate. The one or more bosses may be formed in an edge of the base plate. The one or more bosses may receive a threaded nut fastener and a fastener so that lateral movement of a connection device is prevented. One or more boss walls may extend between and connect two or more bosses.

The one or more boss walls may function to support the bosses. The one or more boss walls may function to prevent debris, fluid, or both from extending past the boss walls. The one or more boss walls may function to prevent the bosses from laterally separating, longitudinally separating, or both. The one or more boss walls may extend from the base plate, the support ribs, a lip, or a combination thereof. The one or more boss walls may form a cantilever connection with an edge of the base plate. The one or more boss walls may laterally extend from an edge of the base plate. The one or more boss walls may tie two or more bosses together, prevent movement of bosses, or both. The one or more boss walls may assist in supporting a connection device, a fastener, or both. The one or more boss walls may connect to one or more cap walls.

The one or more cap walls may function to support the one or more bosses. The one or more cap walls may function to prevent debris, fluid, or both from entering an edge of a connection device. The one or more cap walls may prevent rotational movement of a connection device. The one or more cap walls may extend at an angle relative to a boss wall. The one or more cap walls may be substantially 90 degrees with a boss wall. The one or more cap walls may provide support to the connection device when a force is exerted on the connection device. The one or more cap walls may seal one or more ends of a connection device from entry of debris, fluids, or both into the connection device, between the base plate and the pv laminate, under the base plate, or a combination thereof. The one or more cap walls may be located proximate to the one or more bosses. The one or more bosses may be located proximate to one or more steps.

The one or more steps may function to elevate the connection device so that the connection device is free of contact with an adjacent photovoltaic module. The one or more steps may be a cut out that receives one or more connection devices so that the connection devices are free of contact with an adjacent photovoltaic module. The one or more steps may have a height that is greater than the height of the connection device. The one or more steps may be a recess that the connection device extends into. The one or more steps may be an elevated portion that contacts an adjacent photovoltaic module so that a connection device is elevated above the adjacent photovoltaic module. The one or more steps may be part of the base plate, may be located adjacent to the bosses, may be part of the active portion, may extend from a lip and/or edge of the support portion, or a combination thereof. The base plate may include an active portion, a support portion, an overlap portion, or a combination thereof.

The active portion may function to generate electricity when a pv laminate is connected to the base portion. The active portion may be a portion of the pv laminate that is not covered by one or more adjacent photovoltaic modules. The active portion may be a combination of a support portion of the base plate and a pv laminate.

The support portion may function to provide support to one or more pv laminates. The support portion may support one or more pv laminates during transportation. The support portion may function to support the pv laminate when a load is applied to the pv laminate when the pv laminate is connected to a connection surface. For example, when the photovoltaic module is connected to a roof and a person walks across the photovoltaic array the support portion may resist bending of the pv laminate so that the pv laminate is not damaged. The support portion may function to provide support for one or more adjacent photovoltaic modules. The support portion of a first photovoltaic module may function to overlap one or more connectors of one or more second adjacent photovoltaic modules so that the one or more connectors of the one or more second adjacent photovoltaic modules are protected. The support portion of a first photovoltaic module may protect one or more connectors that are connected to and extend between two adjacent second photovoltaic modules. The support portion may protect the laminate from penetration by foreign objects from the backside. The support portion may provide longitudinal support, lateral support, or both so that the pv laminate does not substantially deflect (i.e., enough to crack, break, or be damaged). The support portion and the pv laminate may be connected. Preferably the support portion and the pv laminate may be movable relative to each other when the pv laminate is connected to the support portion. For example, the support portion may have a coefficient of thermal expansion that is greater than that of the pv laminate and the support portion may expand relative to the pv laminate while providing support to the pv laminate. The pv laminate may be free of a fixed connection with support portion. The support portion may not provide any sealing functions to the pv laminate. The pv laminate and the support portion may be free of a sealed connection. The support portion may resist deflection and provide support to the pv laminate during loading. The support portion may function to remove fluids and/or debris away from the pv laminate. The support portion may include one or more support ribs spaced apart from one or more fluid transfer surfaces.

The one or more fluid transfer surfaces may function to remove water from the photovoltaic modules and the photovoltaic array. The one or more fluid transfer surfaces may allow any fluids that travel under the pv laminate to escape from under the pv laminate. The one or more fluid transfer surfaces may prevent a buildup of fluids under the pv laminate. The one or more fluid transfer surfaces may create a distance between fluids and the pv laminate so that the pv laminate does not sit in fluids. The fluid transfer surfaces may be spaced about 1 mm or more, about 2 mm or more, about 3 mm or more, or even about 4 mm or more from the pv laminate. The one or more fluid transfer surfaces may function to allow fluids to be moved by gravity from the photovoltaic modules. The fluid transfer surfaces may be a plurality of fluid transfer surfaces. The fluid transfer surfaces may be aligned in a direction of a slope of a connection surface. The fluid transfer surfaces may be aligned with a length of the photovoltaic module. The plurality of fluid transfer surfaces may alternate with a plurality of support ribs so that the support ribs elevate the pv laminate above the fluid transfer surfaces.

The support ribs may function to create one or more and preferably a plurality of lines of contact between the pv laminate and the base plate. The support ribs may elevate the pv laminate above the support portion and preferably above the fluid transfer surfaces. The support ribs may be fixedly connected to the pv laminate. The support ribs may be an integral part of the pv laminate. The support ribs may be a reinforcement rib. Preferably, the support ribs may be part of the base plate. The support ribs may be located on the support portion of the base plate. The support ribs may extend above a surface of the support portion so that a pv laminate is located above the base plate. The support ribs may prevent deflection of the pv laminate. The support ribs may be sufficiently tall so that fluids are not trapped between the pv laminate and the support portion. The support ribs may be sufficiently spaced apart so that fluid may be removed from under the pv laminate by the fluid transfer surfaces. The support ribs may be about 5 mm or more apart, about 10 mm or more apart, about 15 mm or more apart, or even about 20 mm or more apart (i.e., about 22 mm). The support ribs may be about 20 cm or less apart, about 15 cm or less apart, or about 10 cm or less apart. The support ribs may have a sufficient width so that the support ribs provide support to the pv laminate. The support ribs may have a width of about 1 mm or more, about 2 mm or more, about 5 mm or more, or even about 7 mm or more wide. The support ribs may have a width of about 20 cm or less, about 15 cm or less, or about 10 cm or less. The support ribs may be short enough that deflection of the pv laminate during a load may cause the pv laminate to contact the fluid transfer surfaces so that further deflection is prevented. The height of the support ribs may vary across the length and/or width of the support portion. For example, the support ribs may be formed at an angle so that the pv laminate has a slope. The support ribs may be all of a uniform height. The support ribs may have a height of about 1 mm or more, about 2 mm or more, or even about 3 mm or more. The support ribs may have a height of about 10 cm or less, about 5 cm or less or about 1 cm or less. The support ribs may provide support to the pv laminate when a load is applied that is substantially orthogonal to the pv laminate. The support ribs may be equally spaced apart along a length, width, or both of the pv laminate. The support ribs may run the length, width, or both of the pv laminate, the support portion, the base plate, or a combination thereof. The support ribs may be substantially parallel to each other, a slope of a connection surface, a flow direction of fluid, a flow direction of debris, or a combination thereof. The support ribs may have a complementary shape to a shape of the bottom of the pv laminate so that the support ribs assist in retaining the pv laminate on the base plate, above the base plate, or both. The support ribs may extend substantially to the edges of the base plate. The support ribs may not be located on the edges of the base plate and one or more lips may be located on the edges of the base plate.

The one or more lips may function to protect the sides, edges, or both of the pv laminate. The one or more lips may assist in retaining the pv laminate on the base plate. The one or more lips may prevent the pv laminate from sliding laterally, longitudinally, or both from the support portion. The one or more lips may function to retain one or more connectors. The one or more lips may form a connection point from one or more connectors. The one or more lips may form an interlock with one or more connectors. The one or more lips may extend above the pv laminate so that when a load is applied to the edges of the pv laminate the one or more lips are contacted first. The one or more lips may protect the pv laminate from a force applied to an edge of the photovoltaic laminate, the photovoltaic module, or both. For example, if the photovoltaic module is dropped on an edge during carrying the lip would act as a barrier between a surface and the edge of the pv laminate. The one or more lips may be formed of the same material as the base plate. The one or more lips may be an extension of material of the base plate. The one or more lips may be a unitary part of the base plate. The one or more lips may be connected to the base plate by one or more of the fasteners discussed herein. The one or more lips may be an extension of one or more of the support ribs. The one or more lips may extend around all or a portion of a periphery of the pv laminate. The one or more lips may include one or more edge channels, one or more drain channels, or both. The one or more edge channels may extend between a lip and a main portion of the base portion. The one or more lips may run continuously along one or more edges of the pv laminate. The one or more lips may be spaced apart along one or more edges of the pv laminate. The one or more lips may be located in the corners of the pv laminate. The one or more lips may include one or more slots that receive one or more connectors, one or more locking features, one or more locking pieces, or a combination thereof. The one or more slots may be a recess that receives a portion of a connector so that the connector is aligned with the pv laminate, the connector is connected to the base plate or both. The one or more lips may include one or more devices for receiving a locking feature, for being received by a locking feature, or both. The one or more slots may extend through a portion of the one or more lips so that a locking feature may be connected to the lip, the base plate, or both. The portion of the lip adjacent to the slots are the guides. The guides may be the solid portion of the lip and the slots may be absence of material in the lip. The guides may function to constrain items that extend into the slot. The guides may assist in forming a connection. The guides may extend into a locking recess. The guides may include the locking piece. The one or more slots may be an absence of material that allows a locking feature to extend over a portion of the lip.

The one or more lips may include one or more locking pieces. The one or more locking pieces may function to form a connection with one or more connectors, one or more locking features, or both. The one or more locking pieces may replace a fastener. The one or more locking pieces may be a detent. The one or more locking pieces may extend from a lip. The one or more locking pieces may extend into a connector, a locking feature, or both. The one or more locking pieces may form a movable connection with a connector, a locking feature, or both. The lip may be free of a locking piece. The one more locking pieces may function to retain one or more connectors. The one or more locking pieces may assist in connecting one or more connectors to the base plate. The one or more locking pieces may form an interlock with one or more locking pieces. The one or more locking pieces may include a recess and/or a slot that receives all or a portion of one or more connectors so that the locking pieces are connected to the base plate. The locking pieces may be an integral part of the base plate. The one or more locking pieces may be connected to the base plate and may assist in connecting a connector to the base plate and the pv laminate. The one or more locking pieces may lock a connector to the base plate without using fasteners. Preferably, the locking feature prevents lateral movement and/or longitudinal movement. More preferably, the locking features assist fasteners in supporting the pv laminate in communication with the base plate. The locking pieces may extend into the connector. The locking pieces may form a friction fit, a snap fit, an interlock, or a combination thereof with the connector. The locking pieces may be used with or in place of a locking feature. The one or more lips may work in conjunction with one or more locking pieces, one or more locking features, or both

The one or more locking feature may function to connect one or more edges and/or sides of the pv laminate to the base plate. The one or more locking features may extend over one or more edges, one or more sides, or both of a pv laminate. The one or more locking features may extend into a slot, through a slot, form a connection with a lip, form a connection with a locking piece, or both. The one or more locking features may bias so that a connection is maintained during expansion, contraction, or both of the base plate, the pv laminate, or both. The one or more locking features may rotate about an axis. The one or more locking features may be made of a material that has elasticity so that the material properties allow the locking feature to bias so that the locking feature: expands and/or contracts with the pv laminate, the base plate, or both; receives a pv laminate; releases a pv laminate; or a combination thereof. The one or more locking features may include a portion that connects to an edge or side of the base plate. The one or more locking features may include a portion that extends from an edge or side of the base plate and extends above the base plate (i.e., is integral). The one or more locking features may include a portion that extends over the pv laminate. The one or more locking features may include a portion that extends over and contacts a surface of the pv laminate so that the pv laminate is retained within the base portion. The one or more locking features may create a movable connection with the pv laminate. The one or more locking features may contact an active side of the pv laminate without covering any of the active area of the pv laminate. The one or more locking features may be part of a connector (e.g., an angled connector). The locking features may be generally "C" shaped, generally "L" shaped, generally "E" shaped, have a lip that extends at an angle from a body portion, or a combination thereof. The one or more locking features may be compressible. The one or more locking features may be elastically deformable, plastically deformable, or both. All or a portion of the one or more locking features may be elastically deformable, plastically deformable, or both. For example, a portion of the locking features may be rigid and a portion of the locking features may be deformable. The one or more locking features may be deformable and/or include a deformable portion so that the locking features are movable to add and/or remove a pv laminate. The one or more locking features may provide anti-vibration characteristics. The one or more locking features may include one or more chatter preventers on any surface, exhibit chatter preventer characteristics, or both. The one or more locking features may form a compression on a base plate, a pv laminate, or both. The one or more locking features may be located on a lateral edge, a longitudinal edge, or both. The one or more locking features may extend from a connector. The one or more locking features may be an integral part of a connector, attached to a connector, or both. The locking features may be located along an edge between the overlap portion and the support portion, along a bottom edge, or both. The locking features may include one or more chatter protectors as is discussed herein. The one or more locking features may function to position the pv laminate. The one or more locking features may be a connector.

The one or more connectors may function to attach a pv laminate to a base plate. The one or more connectors may extend between a portion of a base plate and a portion of a pv laminate to form a connection. The connectors may create a movable connection so that the pv laminate may move relative to the base plate. The connectors may be fixedly connected to the base plate, the pv laminate or both. The connectors may be connected to the base plate by one or more fasteners. The connectors may be adhered to one or more both of the base plate, the pv laminate or both. Preferably, any connections formed between the pv laminate and the base plate has at least one movable portion so that the base plate and the pv laminate are movable relative to each other. Preferably, the one or more connectors may extend between the overlap portion and the support portion. More preferably, the one or more connectors may be fixedly connected to the overlap portion and partially extend over the support portion. For example, the one or more connectors may be bonded, welded, or both to the overlap portion. The connectors may be attached using any fastener discussed herein. Fasteners that may be used are a rivet, screw, nail, bolt, mechanical bonding, heat staking, ultrasonic bonding, friction bonding, vibration welding, adhesive, tape, or a combination thereof. The fasteners may be a blind installed internally threaded rivet, a captive nut, a spring nut, a push nut, a retained nut, a U-nut, or a combination thereof (i.e., a threaded nut fastener). The threaded nut fastener may be a portion that extends into a through hole and a corresponding threaded fastener extends into to form a fixed connection. The threaded nut fastener may form a flush surface with a device with a through hole. The threaded nut fastener may extend partially into a through hole and form a connection with another fastener. The threaded nut fastener may be threaded. The threaded nut fastener may be deformed to create a fixed connection. The one or more fasteners may include one or more through holes for receiving the one or more fasteners. The one or more through holes may function to allow a fastener to pass through the connector so that a connection is formed with a base plate, a pv laminate or both. The one or more connectors may be made of the same material as the base plate. The one or more connectors may connect to a length and width of the pv laminate, base plate, or both at the same time. The one or more connectors may connect in the corners. The one or more connectors may be generally "L" shaped. The one or more connectors may be made of metal, plastic, a polymer, a synthetic material, or a combination thereof. The connectors may be a plate connector, an angled connector, a connection device, a locking feature, or a combination thereof. The connectors may include a chatter preventer.

The chatter preventer may function to substantially reduce and/or eliminate noise, vibrations, harshness, or a combination hereof between the connector and the pv laminate, the base plate, or both. The chatter preventer may include an elastomer, be made of an elastic material, include rubber, a plastic foam, a low modulus material, a silicone, a caulk, a low modulus adhesive or a combination thereof. The chatter preventer may be any material that dampens vibration. The one or more chatter preventers may directly contact a pv laminate. The one or more chatter preventers may be attached to the connector, the pv laminate, or both. The one or more chatter preventers may be attached to a first arm, a second arm, a body portion, between two adjacent photovoltaic modules, between a pv laminate and a base plate, or a combination thereof. The one or more chatter preventers may be part of a plate connector, an angled connector, a connection device, or a combination thereof.

The one or more plate connectors may extend along a side of two adjacent structures. The one or more plate connectors may function to prevent one structure to be lifted relative to the other structure. For example, the plate connector may extend over the top of a pv laminate and a top of a base plate and the plate connector may restrict their movement relative to each other. The plate connector may compress a pv laminate and a base plate so that they are restricted relative to each other. The plate connector may retain a pv laminate within a recess in a base plate. The plate connector may extend over both the pv laminate and the base plate. The plate connector may be fastened to the base plate and only extend over the pv laminate. The plate connectors may be generally flat. The plate connectors may extend in a single plane. The plate connector may include one or more through holes for forming connections. The one or more plate connectors and preferably a plurality of plate connectors may be used in conjunction with one or more and preferably a plurality of angled connectors.

The one or more angled connectors may function to connect to two adjacent planes. The angled connectors may connect to a first edge or side of a base plate and extend over a second edge or side of a base plate. The angled connectors may include fasteners in one or more planes. The angled connectors may fasten in one plane to the base plate and extend over the pv laminate in a second plane. The angled connector may connect to a lip. The angled connector may have an angled piece that forms a cantilever connection and extends over the pv laminate. The angled connector may form a movable connection with the base plate. The angled connector may extend into one or more slots, one or more recesses, or both in a lip of the base plate. The angled connector, the plate connector, connection device, or a combination thereof (i.e., connector) may include a locking feature, a locking recess, a guide, or a combination thereof.

The locking feature may function to lock the connector to the base plate, a lip of the base plate, or both. The locking feature may function to form a connection without a fastener. The locking feature may be one or more protrusions that form a connection with the base plate, the lip, or both. The one or more locking features may receive all or a portion of the base plate, the lip, or both to form connections. The one or more locking features may form a snap fit, an interlock, a sliding connection, a friction fit, or a combination thereof with the base plate, the lip, or both. Preferably, the locking features include a locking recess that receives a portion of the base plate, the lip, or both.

The locking recess may function to form a connection with the base plate by receiving a portion of the base plate, the lip, or both. The locking recess may form a fixed connection with the locking piece. The locking recess may receive the lip. The locking recess may extend through one or more slots in the lip so that a portion of the locking recess was constrained by the slots and a portion of the locking recess is constrained by the portion adjacent the slots. The one or more and preferably a plurality of locking recesses may receive a portion of the lip, a locking piece, or both. The locking recesses may have a generally square shape, rectangular shape, or both. The locking recess may have an open top, an open bottom, or both so that the lip, a portion of the base plate, the locking piece, or a combination thereof may extend into and/or through the locking recess. The one or more locking recesses may be part of a connection device.

The one or more connection devices may function to connect directly to the base plate and form a mechanical connection with the base plate. The one or more connection devices may function to resist wind uplift. The one or more connection devices may resist wind uplift of about 90 km/hr or more, about 110 km/hr or more, about 150 km/hr or more, or even about 200 km/hr or more (e.g., resist a speed of up to about 240 km/hr). The connection device may extend over the pv laminate to form a connection, receive a portion of the pv laminate, or both. The connection devices may extend into a recess in the base plate and be flush with the top of the base plate, pv laminate or both. The connection devices may extend over the pv laminate. The connection devices may form a connection using any of the fasteners discussed herein. Preferably, the connection devices form a connection using adhesive, screws, threaded fasteners, ultrasonic welding, heat staking, or a combination thereof. The connection devices may be a discrete part from the base plate. The connection devices may include one or more body portions that receive a fastener. The body portion may extend fully and/or partially into a recess in the base plate, the pv laminate, or both. The body portion may include a first arm, a second arm, or both that extend therefrom. The first arm, the second arm, or both may extend over the pv laminate, the base plate, or both. The first arm, the second arm, or both may form a cantilever connection with the body portion. The connection devices may be located proximate to the one or more connector channels, align the pv laminate with the connector channels, or both.

The one or more connector channels may function to receive the one or more connectors of the pv laminate. The one or more connector channels may function to protect the pv laminate connectors from contact, a lateral force, a longitudinal force, an impact, or a combination thereof. The one or more connector channels may assist in forming a connection between a connector (e.g., that connects two adjacent photovoltaic modules) and connector of a pv laminate. The one or more connector channels may assist in electrically connecting two adjacent pv laminate connectors. The one or more connector channels may be a recess that receives the connector of the pv laminate. The one or more connector channels may be generally sloped so that the connector channels assist in forming a connection between a connector and a connector of a pv laminate. The one or more connector channels may be located on opposite edges, in opposing edge regions, on opposite sides, or a combination thereof of the base plate. The one or more connector channels may receive all of the connector of the pv laminate. The one or more connector channels may angle downward so that the connector and the pv laminate are on the same plane. The connector channels may include weep ports to remove fluids from the connector channels. The connector channels may include one or more positioning features, be located adjacent to one or more drain channels, or both.

The one or more drain channels may function to remove fluid from the connector channel, the edge channel, under the pv laminate, or a combination thereof. The one or more drain channels may function to remove fluids away from the connectors, electrical connection points, mechanical connection points, or a combination thereof. The one or more drain channels may extend under the pv laminate so that the pv laminate, a connector of the pv laminate, or both are free of fluid. The one or more drain channels may be a recess that channels fluid away from the pv laminate. The drain channels may move fluid into an edge channel, out through a drain port, or both.

The one or more edge channels may function to remove fluid from the edges of the base plate. The one or more edge channels may function to allow for movement of the pv laminates within the base plate, for addition of a pv laminate into the base plate, removal of the pv laminate from the base plate, or a combination thereof while the base plate is connected to a connection surface. The one or more edge channels may create a gap between the positioning feature and the pv laminate. The one or more edge channels may function to allow for expansion and/or contraction of the base plate without contacting the pv laminate, independent of the pv laminate, or both. The edge channels may decouple the edges of the pv laminate from the base plate. The edge channels may create a gap for fluids to exit the base plate. The edge channels may extend the length, width, or both of the pv laminate. The edge channels may be located below the pv laminate. The edge channels may extend parallel to the one or more positioning features.

The one or more positioning features may function to guide one or more connectors (e.g., that connect together connectors of two adjacent photovoltaic modules) into contact with a connector of the pv laminate. The one or more positioning features may function to create a side wall of connector channel. The one or more positioning features may function to protect a side of the connector channel. The one or more positioning features may extend a sufficient amount above the connector, the connector of the pv laminate, or both so that the connectors are protected from a force, an orthogonal force, or both (e.g., a person stepping on the connectors or hail). The one or more positioning features may extend 1 mm or more, 2 mm or more, or even about 3 mm or more above the pv laminate. The one or more positioning features may extend along one or more edges and/or sides, 2 or more edges and/or sides, 3 or more edges and/or sides, may extend around a periphery of the support portion, or a combination thereof. The one or more positioning features may extend above the pv laminate without extending over the pv laminate. The positioning features may guide a connector so that the connector forms an electrical connection, a mechanical connection, or both with two adjacent pv laminate connectors. The positioning features may protect a connector spanning between two adjacent pv laminates, photovoltaic modules, or both. The positioning features may create a stop when the connector is inserted in the connector channels so that the connector is prevented from being pushed into the connectors of the pv laminate and damaging the pv laminate connectors. The one or more positioning features may be located on outside edges of the connector channels, the photovoltaic module, or both. The one or more positioning features may include one or more drain ports, one or more locators, or both.

The one or more locators may function to connect two adjacent photovoltaic modules together. The one or more locators may function to align two or more adjacent photovoltaic modules relative to each other. The one or more locators may function to control the distance between two or more adjacent photovoltaic modules. The one or more locators may contact another locator. The one or more locators may overlap another locator. The one or more locators may contact an edge and/or end of another locator. The locators may extend from an edge of a photovoltaic module, base plate, or both. The locators may form a butt joint. The locators may extend about 1 mm or more, 2 mm or more, 3 mm or more, or even about 5 mm or more from an edge of the base plate, photovoltaic module, or both. The locators may extend about 5 cm or less, about 4 cm or less, about 3 cm or less, or even about 2 cm or less from an edge of the base plate, photovoltaic module, or both. The locators may function to square one photovoltaic module to another photovoltaic module. The locators may assist in aligning the one or more photovoltaic modules to a connection surface, to another photovoltaic modules, or both. The one or more photovoltaic modules may extend from a positioning feature. The one or more positioning features may extend proximate to a connection surface, a drain port, or both.

The one or more drain ports may function to allow fluid to exit the drain channel, the edge channel, the connector channel, or a combination thereof. The one or more drain ports may be a gap, hole, slot, or a combination thereof through the positioning feature. The one or more drain ports may be located at any location along the length and/or width of the base plate. The one or more drain ports may be a single drain port in a central region of the positioning features. The drain channel, the edge channel, the connector channel, or a combination thereof may slope towards the drain port. The one or more positioning features may be located proximate to one or more handles, connection recesses, recess locks fastener locations, fastener supports, connector guides, or a combination thereof.

The one or more connector guides may function to guide a connector into a connector channel. The one or more connector guides may function to prevent a pv laminate from being removed while connected to a connector, an adjacent pv laminate, or both. The one or more connector guides may assist in aligning two connectors so that the connectors are guided together. The one or more connector guides may prevent movement of a connector when in a connected state. The one or more connector guides may prevent stresses from being transferred between two adjacent photovoltaic modules, from one connector of a pv laminate to an adjacent pv laminate by a connector, or a combination of both. The one or more connector guides may prevent rotational stresses, angular stress, or both from being applied to a connector. The one or more connector guides may prevent the connector from tilting, rotating between the photovoltaic modules, or both. The one or more connector guides may prevent angular stress from being applied to all or a portion of the connector. The one or more connector guides may prevent straight portions that connect with the connectors of the pv laminate from being pulled at an angle relative to the connector. For example, a connection may be formed by the connector extending in a first direction and the connector guide may prevent movement of the connector relative to the first direction. The one or more connector guides may retain the connector within the connector channel, prevent the connector from being pulled at an angle relative to the connector channel, or both. The one or more connector guides may include a ribbed portion to prevent movement of the connector. The one or more connector guides may be located in a connection recess, proximate to a connection recess, in a drain channel, or a combination thereof.

The one or more connection recesses may function to connect two or more adjacent photovoltaic modules, two or more adjacent base plates, or both together. The one or more connection recesses may prevent movement of two or more base plates, two or more photovoltaic modules, or both relative to each other. The one or more connection recesses may function to receive a portion of an adjacent photovoltaic module, base plate, or both. The one or more connection recesses may extend along a width of the base plate. The one or more connection recesses may extend transverse to the slope of the roof. The one or more connection recesses may be located in the overlap portion, the support portion, or both. The one or more connection recesses may be spaced apart along the base plate so that the connection recesses may receive a portion of two or more adjacent base plates. The one or more connection recesses may be located along edges, in edge regions, in a central region, or a combination thereof of the base plate. Preferably the connection recesses are evenly spaced out across the base plate, the photovoltaic module, or both. The base plate may include two or more, three or more, four or more, or even five or more connection recesses, connection hooks, or both. The one or more connection recesses may be a plurality of connection recesses that each receives a portion of an adjacent base portion, an adjacent photovoltaic module, or both. The one or more connection recesses may be a through hole that extends through the base plate. The connection recesses may be a recess in the base plate that does not extend through the base plate. The one or more connection recesses may be located proximate to the connectors of the pv laminate, the connector channels, or both so that once a connection is formed the connection recesses assists in preventing movement of two adjacent connects relative to each other. The one or more connection recesses may be any shape that may receive a portion of an adjacent base plate so that the base plates are locked relative to each other, movement relative to each other is prevented, or both. The one or more connection recesses may be round, square, rectangular, oval, octagonal, triangular, a rhombus, or a combination thereof. The one or more connection recesses may include one or more connection ribs that create a border around the connection recesses.

The one or more connection ribs may function to support an adjacent photovoltaic module above the connection recess. The one or more connection ribs may function to prevent fluid from entering into the connection recess. The one or more connection ribs may be an elevated surface that extends from the base plate proximate to the connection recesses. The connection ribs may be a plurality of ribs that extend around a connection recess. The connection ribs may be a single connection rib that extends about a periphery of the connection recess. The connection ribs may be interconnected. A space may be located between the connection ribs. The connection ribs may be one unitary structure that extends from the base plate. The connection ribs may assist in creating a fixed connection with an adjacent photovoltaic module. The connection ribs may assist in placing two adjacent photovoltaic modules in tension. For example, when a connection hook extends through the connection recess and contacts a recess lock a surface of the base plate may contact the connection rib so that the connection hook and the recess lock are always in contact. The one or more connection recesses may include a recess lock that prevents orthogonal movement, vertical movement, or both of two or more base plates, two or more photovoltaic modules, or both relative to each other.

The one or more recess locks may function to maintain a locked connection between two or more adjacent base plates, photovoltaic modules, or both. The one or more recess locks may function to prevent lifting of one base plate relative to another base plate. The one or more recess locks may function to resist wind up lift. The one or more recess locks and connection hooks may resist wind uplift of about 90 km/hr or more, about 110 km/hr or more, or even about 160 km/hr or more. The one or more recess locks may be located in each of the connection recesses. The one or more recess locks may contact a portion of an adjacent base plate, photovoltaic module, or both so that the two or more adjacent base plates, photovoltaic modules, or both are placed in tension. The recess locks may be an elevated portion of the connection recesses. The one or more recess locks may be located in the connection recess and one or more connection hooks may contact the recess locks so that the connections hooks and the recess locks are in tension, a force is applied to the connection hook by the recess lock, or both.

The one or more connection hooks may function to prevent movement (e.g.. vertical, horizontal, longitudinal, diagonal, or a combination thereof) of two or more base plates, two or more photovoltaic modules, or both relative to each other. The one or more connection hooks may prevent wind uplift. The one or more connection hooks may extend into a connection recess. The one or more connection hooks may be complementary to the one or more connection recesses. The base plate may include an equal number of connection hooks and connection recesses. The one or more connection hooks may extend through a connection recess. The one or more connection hooks may contact a portion of the connection recess, an area adjacent to the connection recess, a rear side of the base plate, the photovoltaic module, a recess lock, or a combination thereof. The one or more connection hooks may extend through the connection recess and then turn and contact a portion of the base plate, an opposing side, an internal wall, or a combination thereof. The one or more connection hooks may extend into the connection recess and contact a portion of the inside of the connection recess. The one or more connection hooks may be smaller than the connection recess. A gap may be located on one or both sides, one or both edges, or both of the connection hooks. The one or more gaps may allow the connection hook to move side to side, forward and backwards, diagonally, or a combination thereof. The one or more gaps may allow the connection hooks to extend into the connection recess without being completely aligned. For example, if two adjacent photovoltaic modules are not completely aligned the connection recess may have enough space so that the connection hook can still extend into the connection recess. The gaps may be sufficiently large so that the connection hooks can move side to side in the connection recess during formation of a connection. The one or more gaps may be about 1 mm or more, 2 mm or more, 3 mm or more, or even about 5 mm or more. The one or more gaps may be about 5 cm or less, preferably about 4 cm or less, more preferably about 3 cm or less, or even more preferably about 2 cm or less. The one or more connection hooks may extend into the connection recess and into contact with a recess lock that puts tension of the connection hook so that the base plate is prevented from lifting. The one or more connection hooks may be located along edges, in edge regions, in a central region, or a combination thereof of the base plate. Preferably the connection hooks are evenly spaced out across the base plate, the photovoltaic module, or both. The base plate may include two or more, three or more, four or more, or even five or more connection hooks.

The one or more connection hooks may have a portion that extends in the direction of the slope of the connection structure, opposite the slope or the connection structure, perpendicular to the direction of the slope of the connection structure, or a combination thereof. The one or more connection hooks may extend from a rear side the photovoltaic module, the base plate, or both. The one or more connection hooks may include one or more lock features. The one or more lock features may form a fixed connection with a connection recess, a recess lock, or both. The one or more lock features may function to provide an indication that a lock is formed. The one or more lock features may function to provide resistance when detaching the connection hook from the connection recess. The one or more lock features may be a detent, a snap feature, an interlock, a lip, or a combination thereof. The one or more connection hooks may be on an opposite side of the base plate as the handles, on an opposite end of the overlap portion as the handles, or both.

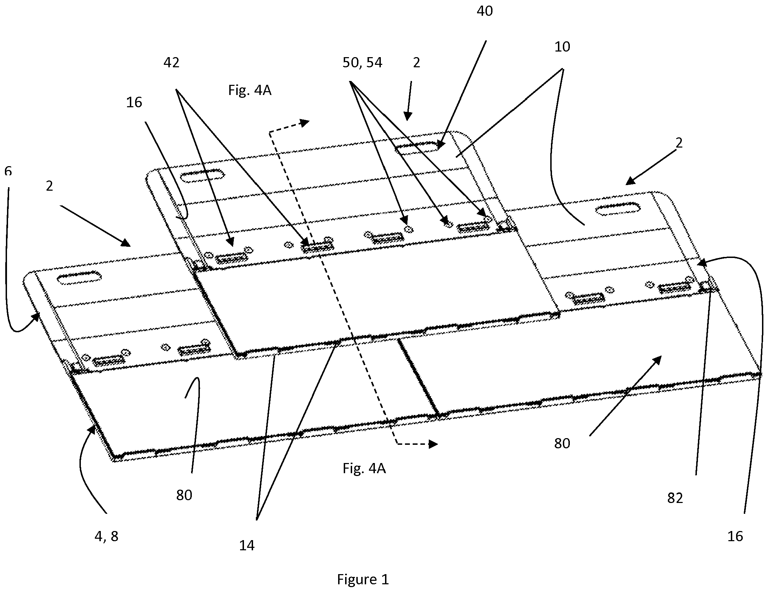

The one or more handles may function to provide a carrying location for the base plate, the photovoltaic module, or both. The one or more handles may function to provide a location to lift the base plate, the photovoltaic module, or both. The one or more handles may be a through hole through the base plate. The one or more handles may be a through hole through the support portion, the overlap portion, or both of the base plate. The one or more handles may assist in forming a connection between two or more adjacent photovoltaic modules, base plates, or both. The one or more handles may align with another structure of one or more adjacent photovoltaic modules. The one or more handles may extend through one or more reinforcement ribs. The one or more handles as taught herein may include teachings from U.S. Provisional Patent Application No. 61/856,125, filed on July 19, 2013, especially the teachings of paragraph nos. 0029 to 0057 and Figures 1-10C as to the mating features, male component, female component, through hole, and projection. The one or more reinforcement ribs may assist in providing strength to the one or more handles.

The base plate, the photovoltaic module, or both may include one or more and preferably a plurality of reinforcement ribs (i.e., reinforcing ribs). The reinforcement ribs may function to provide longitudinal support, lateral support, or both to the base plate. The reinforcement ribs may function to provide support to the pv laminate. Preferably, the reinforcement ribs provide support to the pv laminate when a force is applied to the active portion, the pv laminate, or both. For example, when a pv laminate is stepped on the reinforcement ribs equally distribute the mass so that the pv laminate is fully supported and is not damaged. One or more reinforcement ribs may extend from and be connected to the upper surface, the lower surface, or both of the base plate. The one or more reinforcement ribs may be located in the support portion, the overlap portion, or both. For example, the upper surface, the lower surface, or both and the reinforcing ribs may be one integrally formed piece. The one or more reinforcement ribs may be any rib that extends away from the upper surface, the lower surface, or both and provides support to the base plate, the pv laminate, or both. The reinforcing ribs may be individual ribs that are free of contact with any adjacent ribs. Preferably, the reinforcing ribs are a series of interconnected ribs that extend at angles relative to each other forming a network structure. More preferably, the support portion includes a plurality of reinforcing ribs and at least some of the reinforcing ribs are interconnected. The reinforcing ribs may form discrete closed structures, interconnected closed structures, or both. The reinforcing ribs may be located on an upper surface, a lower surface, or both so that when a force is applied to the support portion the reinforcing ribs are placed in tension, in compression, or a combination of both and provide transverse stiffness, longitudinal stiffness, or both and substantially resist flexing, bending, or both of the attached active portion, an adjacent active portion, or both. The reinforcing ribs may be located at an angle relative to each other so that when a force is applied to the support portion the ribs resist being moved towards each other, resist being moved away from each other, or both.

The reinforcing ribs may extend at virtually any angle relative to the length and width of the support portion. One or more of the reinforcing ribs may be a linear reinforcing rib. Preferably, the reinforcing ribs extend at an angle relative to the length and width (i.e., are not perpendicular and/or parallel to the length and/or width). For example, the one or more ribs may form a 45 degree angle with an edge that extends along the length and an edge that extends along the width. One or more of the reinforcing ribs may be linear (i.e., a linear reinforcing rib). The one or more linear reinforcing ribs may extend in a straight line from one edge to an opposing edge. The linear reinforcing ribs may extend across a width, a length, or both. The linear reinforcing ribs may be located so that the linear reinforcing ribs contact an overlap portion of an adjacent base plate, an adjacent pv laminate, or both. The linear reinforcing ribs may create a flat surface for one base plate to rest upon an adjacent base plate. The linear reinforcing ribs may elevate all or a portion of one base plate upon an adjacent base plate. The reinforcing ribs may extend at any angle that disrupts the flow path of the polymeric composition. The angle of the reinforcing ribs may extend at an angle so that the polymeric composition is disrupted in a primary direction, a secondary direction, or both. One or more reinforcing ribs may be connected together and may form a geometric shape. The one or more reinforcing ribs may be connected together forming a closed pattern (i.e., a reinforcement structure). The one or more reinforcing ribs may be connected together forming a closed pattern and the closed pattern may be connected to an adjacent closed pattern so that a series of interconnected ribs is formed (i.e., a reinforcement structure). One or more reinforcing ribs may be geometric, non-geometric, symmetrical, non-symmetrical, a circle, triangle, a polygon, a diamond, pentagon, hexagon, heptagon, octagon, nonagon, decagon, a hectogon, or a combination thereof.

The one or more reinforcing ribs may have a sufficient height so that the reinforcing ribs extend from an upper surface into contact with a support structure (e.g., a roof) or a lower surface and into contact with a bottom wall of a pv laminate of one or more adjacent photovoltaic modules so that a tapered surface is formed. The height of the one or more reinforcing ribs may be tapered as discussed above with regard to the height support portion. The height of the one or more reinforcing ribs may be one of the heights of the support portions as discussed above. Thus, the height of the reinforcing ribs may vary along with length and/or width of the base plate so that the base plate may form a flat surface for the pv laminate, may be parallel to the support structure, or both. The reinforcing ribs may include one or more rib depressions.

Each of the one or more depressions may be any part of the reinforcing rib where the height of the rib is less than a height of a surrounding rib, a space is formed for fluids to flow, or both. The one or more depressions may function to allow a fluid to flow from the support portion, the active portion, or both of a photovoltaic module. Each reinforcing rib may include one or more depressions, a predetermined region of reinforcing ribs that may include a depression and the other reinforcing ribs may be configured to channel a fluid to the one or more depressions, or both. The depression may be a hole that extends through a rib, a vertical slit in the rib, an absence of a portion of a rib, a gap between two adjacent ribs, or a combination thereof. Preferably the depression is a taper in a rib so that fluid may pass over and/or under the depression and is not retained by the reinforcing rib. The location of the depression may be determined by a predetermined orientation of the reinforcing ribs. For example, if the ribs are designed to be oriented so that the reinforcing ribs face a support structure then the depression may be positioned so that a fluid runs under the depression along the support structure. The rib structures may be made of a polymeric composition.

The polymeric composition may have low shrinkage, result in an uniform elastic modulus between a length and width, or a combination of both. The polymeric composition may be any polymeric composition that may be flowable, have high electrical insulating properties, fluid impermeable, high flexibility, low creep, low modulus, fire retardant, or a combination thereof. Some polymeric compositions that may be used with the photovoltaic module taught herein are an elastomer, thermopolastic, thermosetting polymer, or a combination thereof. The polymeric composition may include a filled or unfilled moldable plastic, polyolefins, acrylonitrile butadiene styrene (SAN), hydrogenated styrene butadiene rubbers, polyester amides, polysulfone, acetal, acrylic, polyvinyl chloride, nylon, polyethylene terephthalate, polycarbonate, thermoplastic and thermoset polyurethanes, polyethylene, polystyrene, synthetic and natural rubbers, epoxies, , polystyrene, thermoplastic elastomer (TPO, TPE, TPR), polyamides, silicones, vinyl based resins, or any combination thereof. The polymeric composition may be free of fillers, fibers, reinforcing materials, or a combination thereof. The polymeric composition may include fillers such as colorants, fire retardant (FR) or ignition resistant (IR) materials, reinforcing materials, such as glass or mineral fibers, surface modifiers, or a combination thereof. The polymeric composition may also include anti-oxidants, release agents, blowing agents, and other common plastic additives. Examples of suitable polymeric compositions are found in U.S. Patent Application Publication No. 2011/0100438.

The base plate may be created by any process where the resulting support portion is substantially flat and free of warp, curl, or both. The base plate may be created by compression molding, injection molding, lamination, thermoforming, rotational molding, or a combination thereof. Preferably, the base plate is produced by injection molding. During processing of the base plate the material properties of the resultant base plate may be substantially different as a result of the flow directions of the polymeric composition (i.e., longitudinal and normal (transverse) directions). These materials may result in a different elastic modulus between the length and width versus a material without the anisotropic materials, and therefore the angle of reinforcement ribs may be varied so that the elastic moduli of the length and width are substantially equal. The teachings herein may include additional teachings that may be found in U.S. Provisional Patent Application No. 61/829,680 filed on May 31, 2013, specifically paragraph nos. 0032 to 0066 and Figures 1-11 as to the reinforcement ribs, the process of making the reinforcement ribs, the composition of the reinforcement ribs, and the support portion. The base plate of the teachings herein may include a support portion for supporting one or more pv laminates.

The one or more and preferably the plurality of pv laminates may be configured in any manner so that each of the plurality of photovoltaic modules may be electrically connected. The pv laminates may include a protective cover (e.g., a glass cover or a barrier plastic cover) and at least one pv cell (e.g., an electrical circuit). Each of the individual photovoltaic modules (i.e., the pv laminates in the photovoltaic modules) may be electrically connected to an adjacent photovoltaic module by one or more connectors. The one or more connectors may comprise a ribbon, a positive buss bar, a negative buss bar, a wire, a part of an integrated flashing piece, or a combination thereof. The connector may extend between two adjacent photovoltaic modules and forms an electrical connection. The connectors may assist in securing the two or more adjacent photovoltaic modules to a support structure. Preferably, the connectors do not assist in connecting the photovoltaic modules to a support structure and the photovoltaic modules are connected to the roof structure by a fastener. Preferably, the overlap support portion is free of connectors. The connectors may be a separate piece, a discrete piece, or both that connects two or more adjacent photovoltaic modules, integrated flashing pieces, or a combination of both. The connectors may extend from an active portion of the photovoltaic module, be part of a photovoltaic module, or both. The connectors may be an integral part of a pv laminate.

The photovoltaic laminate may be connected to a base plate, a support portion of the base plate, or both and form an active portion. The photovoltaic module includes an active portion and a support portion. The active portion and the support portion may be the same region of the base plate. The active portion may be any portion of the photovoltaic module that produces electricity when the active portion is in contact with sunlight. The pv laminate may be made of any material so that when sunlight is directed on the active portion the sunlight is converted into electricity. The pv laminate may be made of one or more photovoltaic cells having a photoactive portion. Preferably, the pv laminate may be made of a plurality of photovoltaic cells. The photovoltaic cells may be made of any material that assists in converting sunlight into electricity. The photovoltaic cells may be of any type and material known in the art. Some non-limiting examples of materials that the photovoltaic cells may be made of include crystalline silicon, amorphous silicon, cadmium telluride (CdTe), gallium arsenide (GaAs), copper chalcogenide type cells (e.g. copper gallium selenides, copper indium gallium selenides (CIGS), copper indium selenides, copper indium gallium sulfides, copper indium sulfides (CIS), copper indium gallium selenide sulfides, etc. (i.e., known generally as CIGSS)), thin-film III-V cells, thin-film II-VI cells, IB-IIIA-chalcogenide (e.g., IB-IIIA-selenides, IB-IIIA-sulfides, or IB-IIIA-selenide sulfides), organic photovoltaics, nanoparticle photovoltaics, dye sensitized photovoltaic cells, and/or combinations of the described materials. In one specific example, the copper indium gallium selenides may be represented by the formula Culn(1-x)GaxSe(2-y)Sy where x is 0 to 1 and y is 0 to 2. For copper chalcogenide type cells, additional electroactive layers such as one or more of emitter (buffer) layers, conductive layers (e.g. transparent conductive layers) or the like maybe used in CIGSS based photovoltaic cells are contemplated by the teachings herein. The active portion may be flexible or rigid and come in a variety of shapes and sizes, but generally are fragile and subject to environmental degradation. In a preferred embodiment, the active portion is a cell that can bend without substantial cracking and/or without significant loss of functionality. Other materials and/or combinations are contemplated herein especially those compositions disclosed in paragraph 0054 of U.S. Patent Application Publication No. 2012/0118349, as to materials for the active portion. The photovoltaic cells of the photovoltaic laminate may be arranged in parallel, series, mixed series-parallel, and/or may be provided in independent circuits. The photovoltaic laminate may be a combination of layers and may form an assembly.

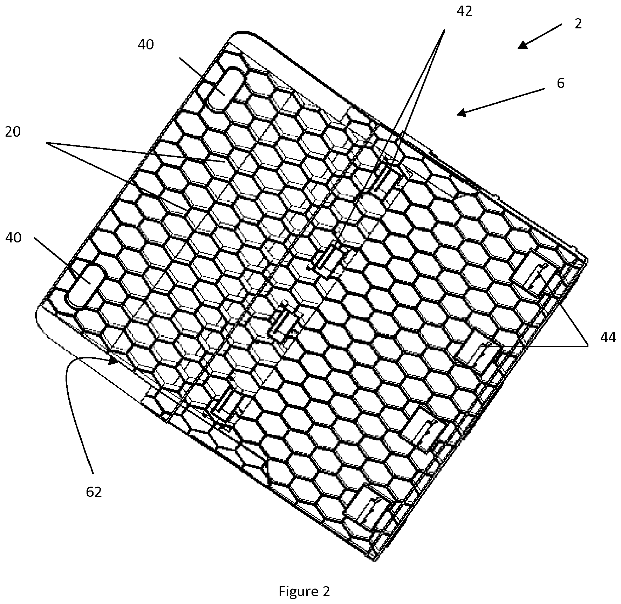

The pv laminate assembly may include one or more of the following components: a forward protective layer, a rearward protective layer, a reinforcement, a photovoltaic cell, a peripheral moisture sensitive edge seal, one or more internal protecting layers, dielectric materials as may be needed to manage the penetration of electrical components outside the laminate, attached connectors and wiring boxes, connector support structures including junction boxes, integrated low profile connectors, encapsulants, moisture resistant back sheets that may optionally include metallized sub layers, or a combination thereof. One example of a pv laminate may include a top layer of glass or a polymeric moisture barrier, an encapsulant layer, an electrical assembly comprising cells, bypass diodes and busses, a rear encapsulant layer, an aluminum based multi-layer back sheet, another encapsulant layer, a rearward protective layer, additional layers around the connector area including a connector support structure, an encapsulant, a dielectric layer, a connector sealant material such as an adhesive with a moisture barrier or another adhesive sealant or potting material, the low profile connector attached to the cells with bus terminals, another layer of encapsulant, and another dielectric layer. The rearward protective layer may help protect the laminate from any protrusions or abrasion from the support structure of the base plate. The pv laminate assembly may be free of an encapsulant layer, a rearward protective layer, or both. One or more of the layers discussed herein may be a combination of layers. For example, a forward protective layer may be a combination of multiple glass layers combined together. As another example, the reinforcement may be a plurality of layers bonded together. The layers of pv laminate assembly may be laminated together. The layers of the pv laminate may be sealed at the edges. Preferably, the pv laminate has a peripheral sealed edge that is resistant to fluid penetration. As discussed herein, each individual layer may include an adhesive so that one or more layers are bonded together forming a layer, each layer may include an adhesive over and/or under another layer so that the one or more adjacent layers are bonded together. Other components and layers of the photovoltaic module are contemplated herein that may be used with the reinforcement taught herein especially those components, layers, and/or materials disclosed in Paragraph Nos. 0048-0053 of U.S. Patent Application Publication No. 2012/0118349, and Paragraph Nos. 0027-0038 and Figures 2A and 2B 2011/0220183, as to components, layers, and/or materials for active portions that may be used in conjunction with the reinforcement and photovoltaic module discussed herein. One or more of the layers of the pv laminate may be electrical circuitry. The electrical circuitry may be sealed within the pv laminate.

The electrical circuitry of the photovoltaic laminate may be one or more buss bars, one or more ribbons, or both. The electrical circuitry may extend from cell to cell, photovoltaic module to photovoltaic module, cell to a photovoltaic module, active portion to active portion, or a combination thereof. The electrical circuitry may be integrated into the one or more photovoltaic cells, connect the one or more photovoltaic cells, be electrically connected to the one or more photovoltaic cells, or a combination thereof. The electrical circuitry may be integrated into and/or around one or more layers of the photovoltaic laminate. The electrical circuitry may extend through the photovoltaic laminate, extend partially outside of the photovoltaic laminate so that an electrical connection may be formed, have a portion that is located adjacent to the photovoltaic laminate, or a combination thereof. The photovoltaic laminate may be connected to a support portion of a base plate forming an adjacent portion. The pv laminate may include one or more connectors that are part of the electrical circuity and extend outside of the pv laminate. The one or more connectors may have a portion that is sealed within the pv laminate and a portion that extends out of the pv laminate.

Figure 1 illustrates a perspective view of a three photovoltaic modules 2 connected together. Each of the photovoltaic modules 2 include an active portion 4 and a base plate 6. The base plate 6 includes an overlap portion 10 and a support portion 8. The support portion 8 is connected to and supports a photovoltaic laminate 80 that converts light to energy by a plurality of locking features 14. The photovoltaic laminate 80 includes connectors 82 that are seated within a connector channel 16 so that an electrical connection can be formed with the photovoltaic laminate 80. The overlap portion 10 includes a pair of handles 40 that as shown are molded in the base plate 6. The overlap portion 10 also includes a plurality of connection recesses 42 for receiving the connection hooks 44 (not shown) of the overlapping photovoltaic module 2. A plurality of fastener locations 50 include a plurality of fastener supports 54 that are illustrated and are located in the overlap portion 10 proximate to the connection recesses 42.

Figure 2 illustrates a lower surface 62 of a base plate 6 of a photovoltaic module 2. The photovoltaic module 2 includes a plurality of interconnected reinforcing ribs 20. The reinforcement ribs 20 as illustrated are in a hexagon shape. The base plate 6 includes a pair of handles 40 and four connection recesses 42 and four connection hooks 44 that are in line with the connection recesses 42.

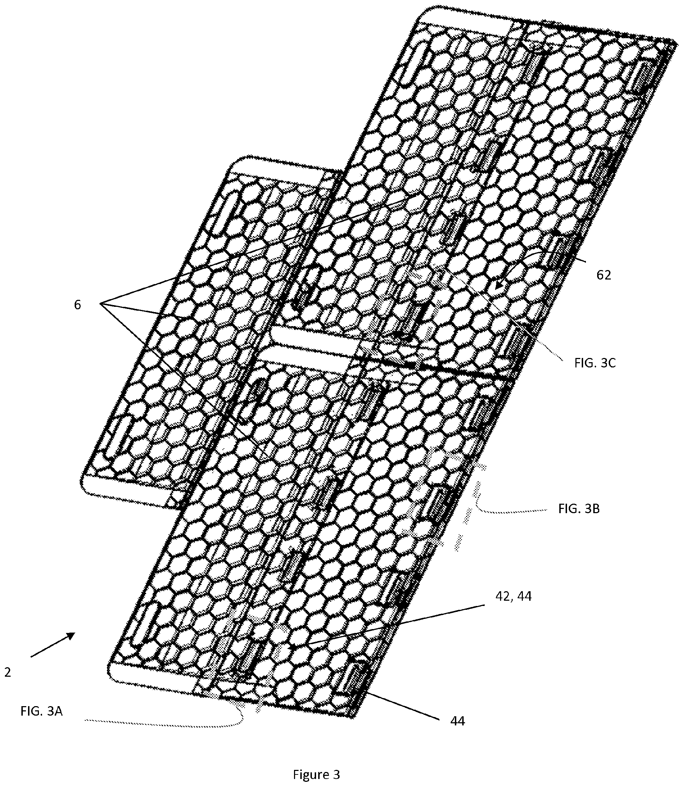

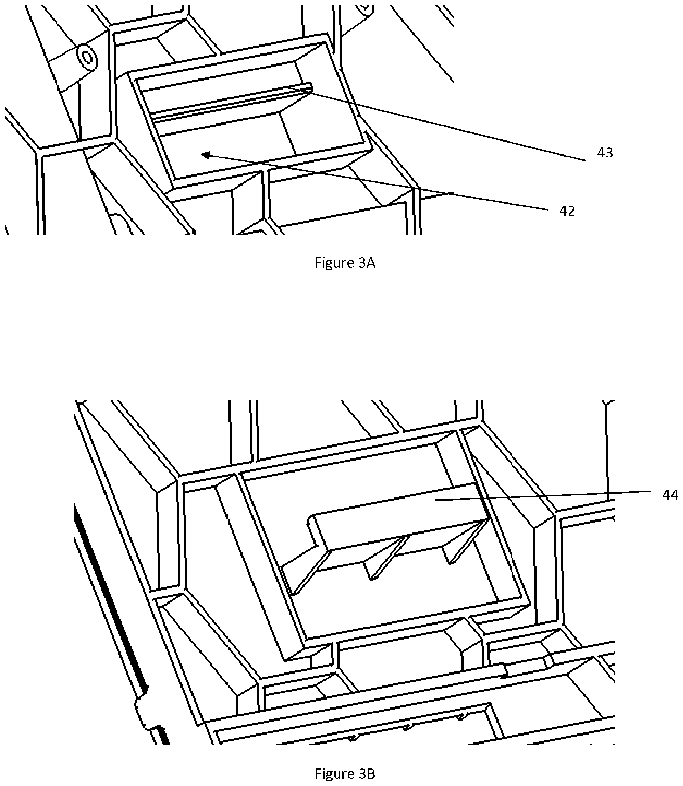

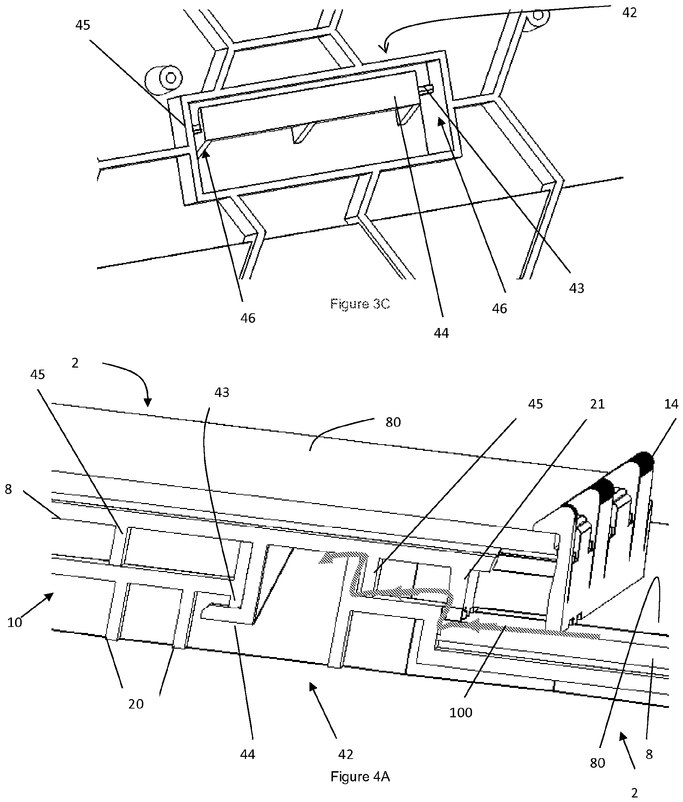

Figure 3 illustrates a bottom view of the three photovoltaic modules 2 of Figure 1 with the lower surface 62 of the base plates 6 exposed. The connection hooks 44 are shown extending into the connection recesses 42 of the overlapped photovoltaic modules 2.

Figure 3A is a close up view of the connection recess 42. The connection recess 42 has a recess lock 43 that assists in preventing the connection hook 44 (not shown) in moving once a connection is created. A gap 46 is located on each side of the connection hook 44 (not shown). The recess lock 43 primarily prevents an upper photovoltaic module from being lifted due to wind.

Figure 3B illustrates a close up view of the connection hook 44. The connection hook is generally "L" shaped so that a connection is formed between two adjacent photovoltaic modules.

Figure 3C illustrates a connection between the connection hook 44 and the connection recess 42. The connection hook 44 extends into the connection recess 42 and contacts the recess lock 43 to assist in preventing wind up lift. The connection recess 42 includes a connection rib 45 that extends around a periphery of the connection recess 42. A gap 46 is located between the connection ribs 45 that extend on each side of the connection hook 44 and the connection recess 42.

Figure 4A illustrates a cross-sectional view of Figure 1 along lines Fig. 4A-Fig. 4A. A support portion 8 of a first photovoltaic module 2 is located on an overlapping portion 10 of a second photovoltaic module 2. The overlap portion 10 includes a plurality of reinforcement ribs 20 and one of the reinforcement ribs 20 is a linear reinforcement rib 21 that extends along a width of the rib. The overlapping portion 10 includes a connection recess 42 that supports the first photovoltaic module 2 above the second photovoltaic module 2. The connection recess 42 also includes a recess lock 43 that prevents vertical movement of the first photovoltaic module 2 away from the second photovoltaic module by the connection hook 44 contacting the recess lock 43. The photovoltaic laminate 80 is connected to the support portion 8 by a locking feature 14 extending from an end region of the photovoltaic module 2 and over the photovoltaic laminate 80. As illustrated the linear reinforcement rib 21 creates a first fluid barrier and the connection recess 42 and the connection ribs 45 of the connection recess 42 create a second fluid barrier so that a tortuous fluid path 100 is created so that fluid does not enter the connection recess 42.

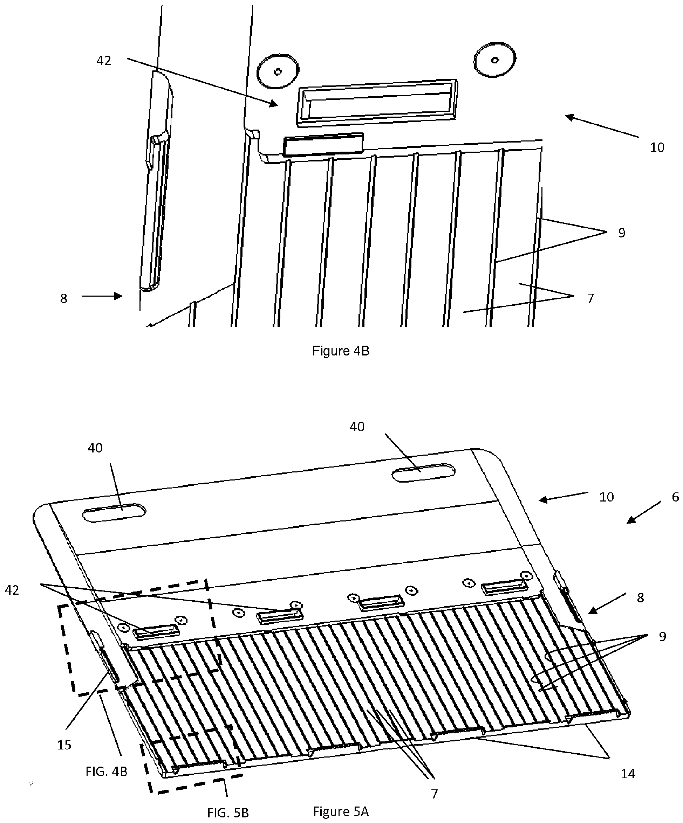

Figure 4B illustrates a top view of a connection recess 42 on the overlap portion 10, and the support portion 8 with the photovoltaic laminate 80 which has been removed. The connection recess 42 provides support to an adjacent photovoltaic module 2 and create a fluid barrier when the adjacent photovoltaic module is placed over the connection recess 42. The support portion 8 includes support ribs 9 and a fluid transfer surface 7. The support ribs 9 elevate and support a photovoltaic laminate 80 so that fluid can travel in the fluid transfer surface 7 between the ribs 9 and off of the photovoltaic module 2.

Figure 5A illustrates a top perspective view of a base plate 6. The base plate 6 has a support portion 8 and an overlap portion 10. The overlap portion 10 includes a pair of handles 40 and connection recesses 42 for forming a connection with adjacent photovoltaic modules. The support portion 8 includes locking features 14 that secure a photovoltaic laminate (not shown) to the support portion and positioning features 15 that prevent transverse movement and may lock the photovoltaic laminate in place. The support portion 8 also includes a plurality of support ribs 9 with fluid transfer surfaces 7 between the support ribs 9. The support ribs 9 elevate the photovoltaic laminate when it is connected and provide a path for fluid to exit the photovoltaic module.

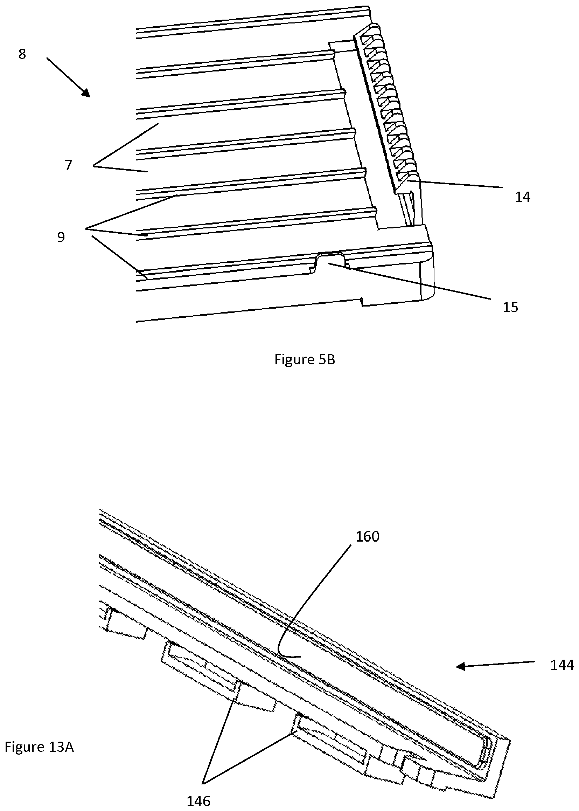

Figure 5B illustrates a close-up view of locking feature 14 and positioning feature 15 that are integrally connected to and located in the support portion 8 of the photovoltaic module. The support portion 8 includes a plurality of support ribs 9 and a plurality of fluid transfer surfaces 7 located between the support ribs 9.

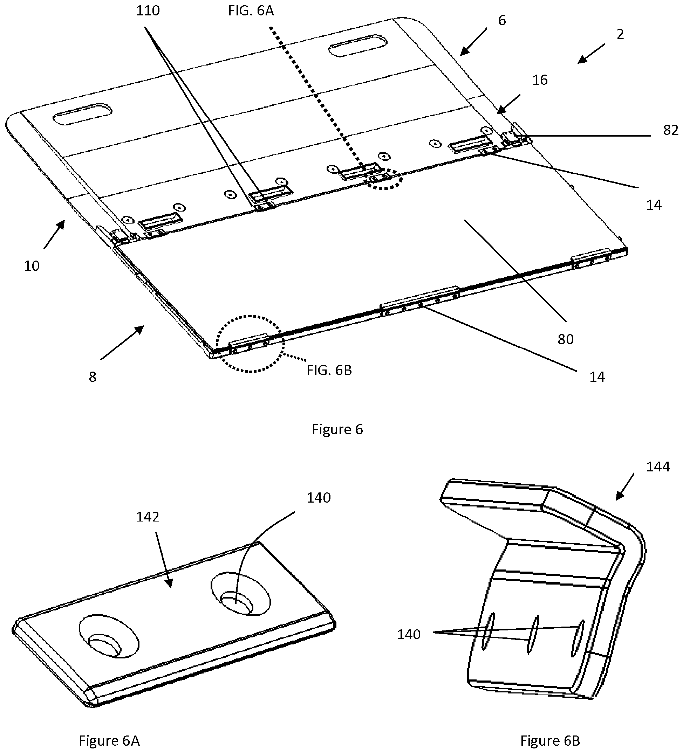

Figure 6 illustrates a photovoltaic module 2 including a base plate 6 and a photovoltaic laminate 80 connected to the base plate 6. The base plate 6 includes a support portion 8 and an overlap portion 10. The overlap portion 8 includes a connector channel 16 for accommodating the connector 82 of the photovoltaic laminate 80. The photovoltaic laminate 80 is connected to the base plate by locking features 14 extending between the support portion 8 and the overlap portion 10. Another group of locking features 14 are located along a bottom edge of the support portion 8. All of the locking features 14 as illustrated include through holes that fasteners 110 extend through to form a fixed connection.

Figure 6A illustrates a connection device configured as a plate connector 142 having a pair of through holes 140 for forming a connection with the base plate as is shown in Figure 6.

Figure 6B illustrates a side view of a connection device configured as an angled connector 144. The angled connector 144 extends along an end of the base plate 6 and a part extends over the photovoltaic laminate as is shown in Figure 6.

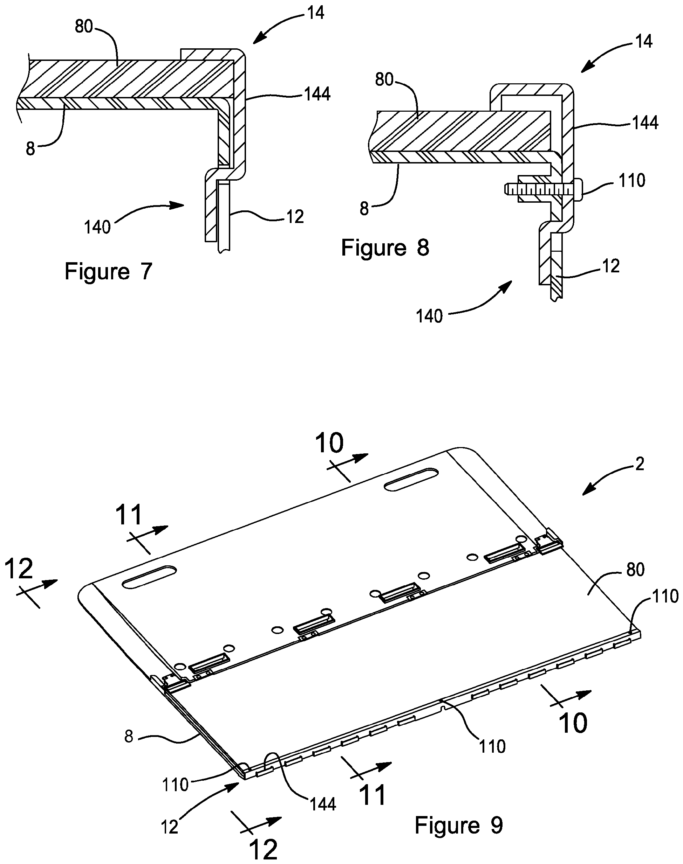

Figure 7 illustrates a photovoltaic laminate 80 connected to a support portion 8. The support portion 8 includes a lip 12 that extends downward from the photovoltaic laminate 80. The lip 12 includes a through hole 140 that a locking feature 14 extends through to form a fixed connection. The locking feature 14 as illustrated is an angled connector 144 that extends from a first side of the lip 12 through the through hole 140 to a second side of the lip 12 and then over a portion of the photovoltaic laminate 80 so that the photovoltaic laminate is retained in place. The locking feature 14 is free of any additional fasteners that hold the locking feature in place 14.

Figure 8 illustrates a photovoltaic laminate 80 connected to a support portion 8. The support portion 8 includes a lip 12 that extends downward from the photovoltaic laminate 80. The lip 12 includes a through hole 140 that a locking feature 14 extends through to form a fixed connection. The locking feature 14 as illustrated is an angled connector 144 that extends from a first side of the lip 12 through the through hole 140 to a second side of the lip 12 and then over a portion of the photovoltaic laminate 80 so that the photovoltaic laminate is retained in place. The locking feature 14 includes at least one fastener 110 that extends through the angled connector 144 and connects to the lip 12.

Figure 9 illustrates a photovoltaic module 2 having a photovoltaic laminate 80 that is connected to a support portion 8 by an angled connector 144. The angled connector is attached to a lip 12 of the support portion 8 by a plurality of fasteners 110.

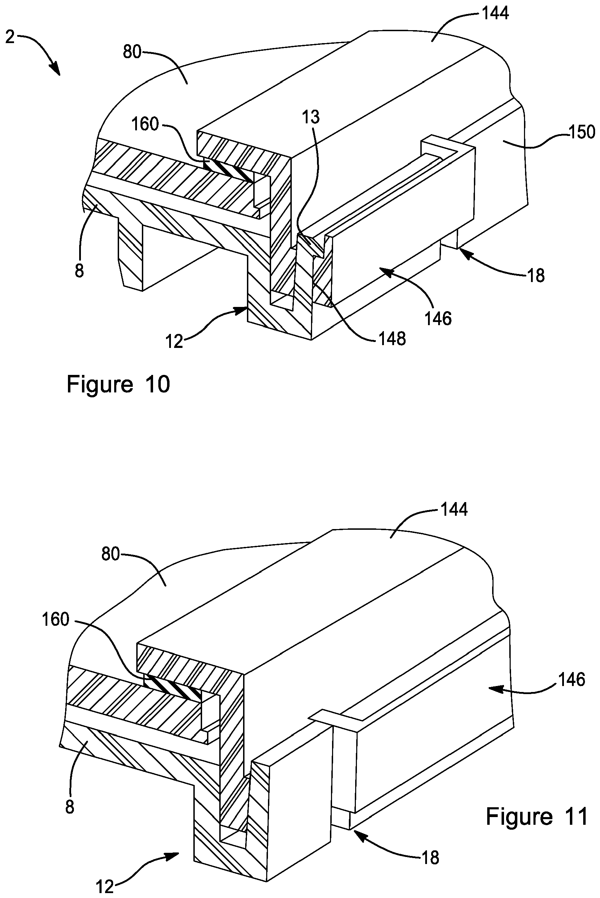

Figure 10 illustrates a cross-sectional view of Figure 9 cut along lines 10-10 through an angled connector 144 and locking feature 146 of a photovoltaic module 2. The photovoltaic module 2 includes a photovoltaic laminate 80 that is connected to a support portion 8 by an angled connector 144. The support portion 8 includes a lip 12 that receives a portion of the angled connector 144. The lip 12 also includes a slot 18 that a locking feature 146 of the angled connector 144 extends through so that a locking recess 148 can form a locked connection with a locking piece 13 on the lip 12. The locking recess 148 also receives a portion of the slot 12 and forms a fixed connection with the locking piece 13. The locking piece 13 includes a portion that extends into the locking recess 148 so that a connection is formed. The slot 18 extends between the lip 12 and a guide 150 of the lip. The guide 150 assists in preventing wind chatter created by the angled connector 144. The angled connector 144 also includes a chatter preventer 160 that extends between the photovoltaic laminate 80 and the angled connector 144 so that movement of the photovoltaic laminate 80 is restricted and noise is not created by contact between the angled connector 144 and the photovoltaic laminate 80.

Figure 11 illustrates a cross-sectional view of Figure 9 cut along lines 11-11 through an angled connector 144 and between locking features 146 of the angled connector 144. The angled connector 144 extends into a slot 18 in a lip 12 of the support portion 8 and the angled connector 144 includes a locking feature 146 that extends through a slot 18 in the lip 12. The angled connector 144 includes a wind chatter protector 160 that is in contact with the photovoltaic laminate 80 and assists in holding the photovoltaic laminate 80 in place as well as reduce noise between the structures.

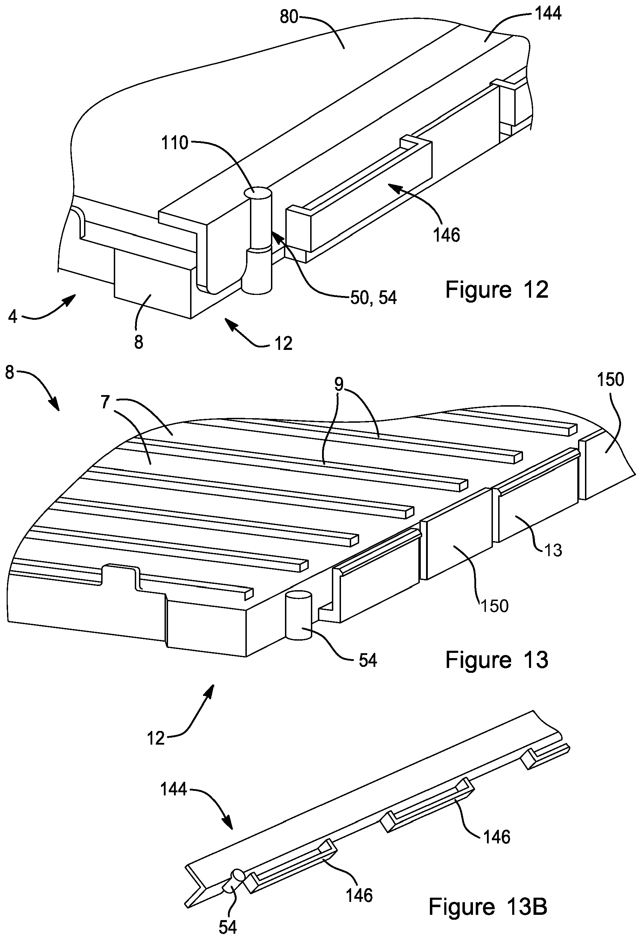

Figure 12 illustrates a side view of the active portion 4 of the photovoltaic module of Figure 9. An angled connector 144 is shown holding a photovoltaic laminate 80 on a support portion 8. The support portion includes fastener locations 50 along its length and the fastener locations 50 include fastener supports 54 that receive a fastener 110 so that the angled connector 144 and the support portion 8 are connected. The angled connector 144 has a locking feature 146 that receives a portion of the lip 12 so that the lip 12 and the locking feature 146 are connected together.

Figure 13 illustrates the support portion 8 of Figure 9 with the photovoltaic laminate 80 removed. The support portion 8 includes a lip 12 with a plurality of locking pieces 13 extending therefrom that form a connection with an angled connector (not shown). A fastener support 54 extends from the edge of the support portion 8 and is configured to receive one or more fasteners. A plurality of guides 150 are located on the lip 12 between the plurality of locking pieces 13. The support portion 8 has a plurality of support ribs 9 that extend above a fluid transfer surface 7 so that fluids that penetrate below the photovoltaic laminate (not shown) are removed along the fluid transfer surfaces 7.

Figure 13A illustrates a bottom perspective view of an angled connector 144. The angled connector 144 includes a plurality of locking features 146 that extend therefrom. The locking features 146 are configured to receive and lock to a portion of the base plate (not shown) to retain a photovoltaic laminate (not shown) in place. The angled connector 144 includes a chatter preventer 160.

Figure 13B illustrates a top view of an angled connector 144. The angled connector 144 includes a plurality of locking features 146 that have through holes that extend therethrough. A fastener support 54 extends from the angled connector 144 for connecting the angled connector 144 to the support portion (not shown).

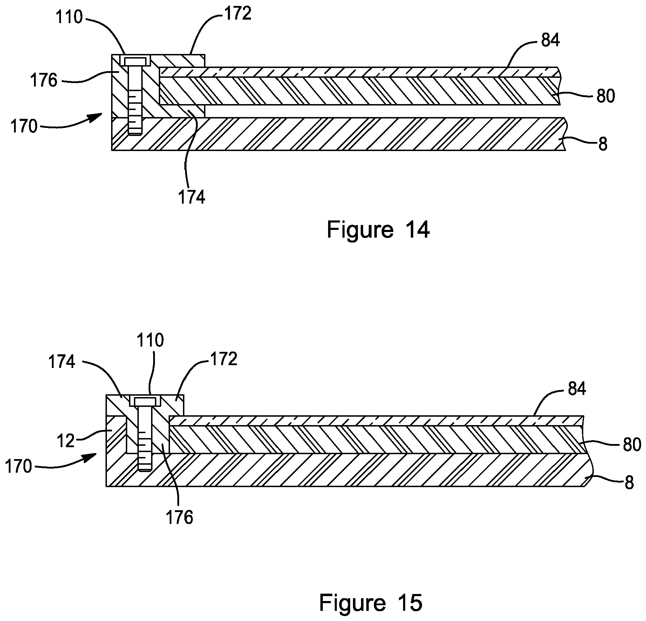

Figure 14 illustrates a side view of a connection of a photovoltaic laminate 80 to a support portion 8. The photovoltaic laminate 80 and protective cover 84 are connected to the support portion 8 by a connection device 170. The connection device 170 includes a body portion 176 including a first arm 172 and a second arm 174. The photovoltaic laminate 80 and protective cover 84 are sandwiched between the first arm 172 and the second arm 174 so that a connection is formed. A fastener 110 extends through the connection device 170 and connects the connection device 170 to the support portion 8. The connection device 170 as illustrated has a generally "C-shape."

Figure 15 illustrates a side view of a connection of a photovoltaic laminate 80 and a protective cover 84 to a support portion 8. A connection device 170 has a first arm 172 and a second arm 174. The second arm 174 extends over the protective cover 84 and photovoltaic laminate 80 and the first arm 172 extends over a lip 12 of the support portion 8. A fastener 110 extends between the first arm 172 and the second arm 174 and through the body portion 176 of the connection device 170 so that the protective cover 84 and the photovoltaic laminate 80 are connected to the support portion 8.

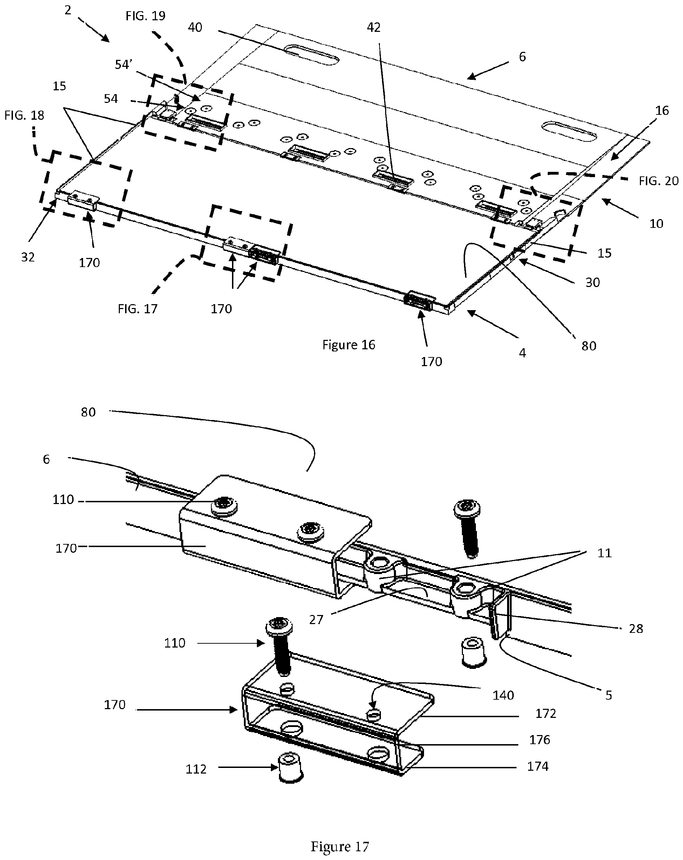

Figure 16 illustrates a perspective view of a solar module 2. The solar module 2 includes a base plate 6. The base plate 6 includes an active portion 4 and an overlap portion 10. The overlap portion 10 includes a connector channel 16 along the edges and a pair of handles 40 along the end. The overlap portion 10 includes connection recesses 42 that is heat staked to the overlap portion 10 and is located proximate to and extending over a portion the active portion 4 and a pair of fastener supports 54 and a pair of alternative fastener supports 54' on each side of the connection recesses 42. The active portion 4 includes a positioning feature 15 along the edges so that the positioning feature 15 protects the photovoltaic laminate 80. The positioning feature 15 includes a drain port 30 to allow for fluids to exit the active portion 4. An edge channel 32 is formed between the positioning features 15 and the photovoltaic laminate 80. A plurality of connection devices 170 connect the photovoltaic laminate 80 to the base plate 6.

Figure 17 illustrates a close-up exploded view of a connection device 170. The exploded connection device 170 is shown as being transparent so that all of the through holes 140 are visible. The connection device 170 includes a body portion 176 extending between a first arm 172 and a second arm 174. The connection device 170 is generally "C" shaped so that the first arm 172 extends over the photovoltaic laminate 80 and the second arm 174 extends under the base plate 6 with the body portion 176 covering an end of the base plate 6 and photovoltaic laminate 80. The connection device 170 is connected to the photovoltaic laminate 80 and base plate 6 by a threaded nut fastener 112 extending through the through hole 140 in the second arm 174 and a boss 11 of the base plate 6 and then a fastener 110 extending through the through hole 140 in the first arm 172, through the base plate 6, and then through the threaded nut fastener 112. The base plate 6 includes a step 5 so that the connection device 170 is elevated above an adjacent photovoltaic module, is free of contact with an adjacent photovoltaic module, or both. A boss wall 27 extends between and connects the bosses 11. The boss wall 27 reinforces the bosses 11 and prevents debris from extending under the photovoltaic laminate 80. Cap walls 28 are located on each side of the bosses 11 and prevent debris from entering the sides of the of the connection device 170.

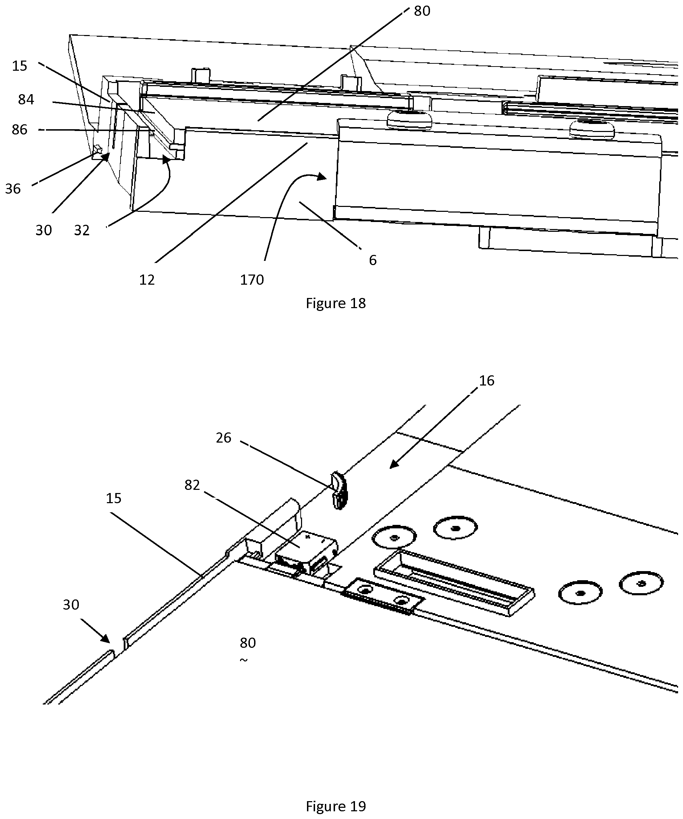

Figure 18 illustrates an end view of a base plate 6 including a photovoltaic laminate 80 that is located between a positioning feature 15 on one edge and a lip 12 on an adjacent end. The photovoltaic laminate 80 includes a protective cover 84 over a laminate of photovoltaic cells 86. An edge channel 32 extends between the photovoltaic laminate 80 and the positioning feature 15 so that the base plate 6 can expand and contract relative to the photovoltaic laminate 80 and so that fluids can be channeled away from the photovoltaic laminate 80. The positioning feature 15 includes a drain port 30 that allows fluid to flow out of the edge channel 32 and a drain channel 34 (not shown). The positioning feature 15 includes a locator 36 extending from an edge of the base plate 6. A connection device 170 extends over the lip 12 of the base plate 6 and the photovoltaic laminate 80 so that the base plate 6 and the photovoltaic laminate 80 are connected.

Figure 19 illustrates a connector channel 16. The connector channel 16 houses a connector 82 and includes a connector guide 26 for contacting a connector (not shown) so that the photovoltaic laminate 80 cannot be removed while still connected to the connector and so that stresses are not transferred from one photovoltaic module to an adjacent photovoltaic module. The connector channel 16 includes a positioning feature 15 and a drain port 30 for allowing fluid to exit the connector channel 16.

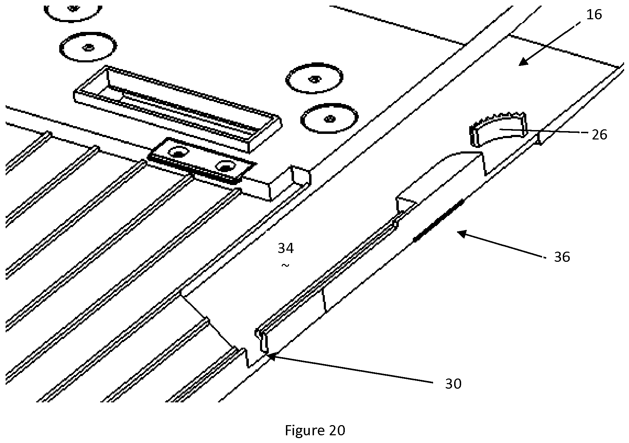

Figure 20 illustrates the connector channel 16 and the drain channel 34 with the photovoltaic laminate removed. The connector channel 16 and the drain channel 34 are connected together and can drain through a drain port 30. A locator 36 is located proximate to the drain port 30. A connector guide 26 is located in the connector channel 16 for guiding a connector (not shown) into contact with a connector of the photovoltaic laminate (not shown).

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the teachings should, therefore, be determined not with reference to the above description, but should instead be determined with reference to the appended claims, along with the full scope of equivalents to which such claims are entitled. The omission in the following claims of any aspect of subject matter that is disclosed herein is not a disclaimer of such subject matter, nor should it be regarded that the inventors did not consider such subject matter to be part of the disclosed inventive subject matter.

## Claims

1. A photovoltaic module comprising:
a base plate including:
a support portion including one or more connection hooks and
an overlap portion including one or more connection recesses; and
a photovoltaic laminate that is connected to the base plate;
wherein the photovoltaic module is configured to be directly connected to a roofing structure and provide roofing functions,
wherein the photovoltaic laminate is connected to the support portion and the photovoltaic laminate is removable from the support portion without damaging the base plate and the overlap portion is configured to be at least partially covered by one or more adjacent photovoltaic modules;
wherein one or more adjacent photovoltaic modules include one or more connection hooks that extend through the one or more connection recesses in the overlap portion so that the one or more adjacent photovoltaic modules are connected to the base plate; and
wherein the base plate retains its roofing functions when the photovoltaic laminate is removed.

2. The photovoltaic module of claim 1, wherein the photovoltaic laminate is removable from the base plate without damaging the photovoltaic laminate.

3. The photovoltaic module of any of the preceding claims, wherein the base plate includes one or more connection devices along two or more edges of the base plate that connect the photovoltaic laminate to the base plate.

4. The photovoltaic module of claim 3, wherein the one or more connection devices are configured so that the photovoltaic laminate is retained within the base plate by the one or more connection devices when the base plate is subjected to mechanical lifting and/or to wind uplift forces.

5. The photovoltaic module of claim 3 or claim 4, wherein the one or more connection devices are integrally moulded into the base plate.

6. The photovoltaic module of claim 3 or claim 4, wherein the one or more connection devices are discrete from the photovoltaic laminate and the base plate and the one or more connection devices fixedly connect to the base plate so that the photovoltaic laminate is fixedly connected to the base plate.

7. The photovoltaic module of any of the preceding claims, wherein the base plate extends above a sufficient amount of each edge of the photovoltaic laminate so that the base plate protects edges of the photovoltaic laminate from damage.

8. The photovoltaic module of any of the preceding claims, wherein when the photovoltaic laminate is connected to the base plate the photovoltaic laminate and the base plate still remain decoupled so that the base plate and the photovoltaic laminate are free to expand and contract independently of each other.

9. The photovoltaic module of any of claims 2 through 7, wherein the one or more connection devices include one or more chatter preventers that extend between the photovoltaic laminate and the one or more connection devices, the base plate and the one or more connection devices, the photovoltaic laminate and the base plate, or a combination thereof.

10. The photovoltaic module of claim 9, wherein the base plate includes a plurality of reinforcement ribs that are a series of interconnected closed patterns, a plurality of closed patterns located adjacent to one another, a plurality of partially interconnected patterns through the upper surface and/or lower surface, or a combination thereof, and the reinforcement ribs are substantially similar repeating structures, symmetrical, non-symmetrical, a circle, triangle, a polygon, a diamond, pentagon, hexagon, heptagon, octagon, nonagon decagon, a hectogon, or a combination thereof so that a series of reinforcement ribs substantially cover the upper surface or the lower surface of the base plate.

11. The photovoltaic module of any of claims 9 through 10 , wherein the base plate includes fibers in the upper surface or the lower surface between each of the one or more reinforcement ribs that are oriented generally along a flow direction of a polymeric composition that forms the base plate and
wherein the fibers in the plurality of reinforcement ribs are oriented along a direction of the plurality of reinforcement ribs; normal to the upper surface, normal to the lower surface, or both within the reinforcement ribs; or a combination of both so that the orientation of the fibers in the plurality of reinforcement ribs is different than the orientation of the fibers in the upper surface or the lower surface.

12. The photovoltaic module of any of the preceding claims, wherein edges and sides of the photovoltaic laminate are substantially sealed so that the photovoltaic laminate is impenetrable to fluids when not connected to the base plate.

13. The photovoltaic module of any of the preceding claims, wherein the base plate includes a connector channel in opposing edge regions of the base plate that each receive a connector of the photovoltaic laminate and assists in forming an electrical connection.

14. The photovoltaic module of any of the preceding claims, wherein the base plate include one or more connection ribs that extend around the one or more connection recesses.

15. The photovoltaic module of any of the preceding claims, wherein the one or more connection hooks extend from a bottom side of the support portion so that when the photovoltaic module is connected to the one or more adjacent photovoltaic modules each of the one or more connection hooks extend through the one or more connection recesses of the one or more adjacent photovoltaic modules and into contact with a bottom side each of the one or more photovoltaic modules.

## Patentansprüche

1. Photovoltaikmodul, umfassend:
eine Grundplatte, umfassend:
einen Trägerabschnitt umfassend einen oder mehrere Verbindungshaken und
einen Überlappungsabschnitt umfassend einen oder mehrere Verbindungsaussparungen; und
ein mit der Grundplatte verbundenes Photovoltaiklaminat;
wobei das Photovoltaikmodul ausgestaltet ist, direkt mit einer Dachstruktur verbunden zu sein und Dachfunktionen bereitzustellen,
wobei das Photovoltaiklaminat mit dem Trägerabschnitt verbunden ist und das Photovoltaiklaminat von dem Trägerabschnitt entfernbar ist, ohne die Grundplatte zu beschädigen, und der Überlappungsabschnitt ausgestaltet ist, zumindest teilweise durch ein oder mehrere angrenzende Photovoltaikmodule abgedeckt zu sein;
wobei ein oder mehrere angrenzende Photovoltaikmodule einen oder mehrere Verbindungshaken umfassen, die sich durch die eine oder mehreren Verbindungsaussparungen in dem Überlappungsabschnitt derart erstrecken, dass das eine oder die mehreren angrenzenden Photovoltaikmodule mit der Grundplatte verbunden sind; und
wobei die Grundplatte ihre Dachfunktionen beibehält, wenn das Photovoltaiklaminat entfernt ist.

2. Photovoltaikmodul nach Anspruch 1, wobei das Photovoltaiklaminat von der Grundplatte entfernbar ist, ohne das Photovoltaiklaminat zu beschädigen.

3. Photovoltaikmodul nach einem der vorhergehenden Ansprüche, wobei die Grundplatte eine oder mehrere Verbindungsvorrichtungen entlang zwei oder mehreren Kanten der Grundplatte umfasst, die das Photovoltaiklaminat mit der Grundplatte verbinden.

4. Photovoltaikmodul nach Anspruch 3, wobei die eine oder mehreren Verbindungsvorrichtungen derart ausgestaltet sind, dass das Photovoltaiklaminat in der Grundplatte durch die eine oder mehreren Verbindungsvorrichtungen gehalten ist, wenn die Grundplatte mechanischen Hebe- und/oder Windenhubkräften ausgesetzt ist.

5. Photovoltaikmodul nach Anspruch 3 oder Anspruch 4, wobei die eine oder mehreren Verbindungsvorrichtungen integral in die Grundplatte geformt sind.

6. Photovoltaikmodul nach Anspruch 3 oder Anspruch 4, wobei die eine oder mehreren Verbindungsvorrichtungen von dem Photovoltaiklaminat und der Grundplatte getrennt sind und die eine oder mehreren Verbindungsvorrichtungen fest mit der Grundplatte derart verbunden sind, dass das Photovoltaiklaminat fest mit der Grundplatte verbunden ist.

7. Photovoltaikmodul nach einem der vorhergehenden Ansprüche, wobei sich die Grundplatte über einen ausreichenden Betrag jeder Kante des Photovoltaiklaminats derart erstreckt, dass die Grundplatte Kanten des Photovoltaiklaminats vor Beschädigung schützt.

8. Photovoltaikmodul nach einem der vorhergehenden Ansprüche, wobei, wenn das Photovoltaiklaminat mit der Grundplatte verbunden ist, das Photovoltaiklaminat und die Grundplatte immer noch entkoppelt bleiben, sodass sich die Grundplatte und das Photovoltaiklaminat unabhängig voneinander frei ausdehnen und zusammenziehen können.

9. Photovoltaikmodul nach einem der Ansprüche 2 bis 7, wobei die eine oder mehreren Verbindungsvorrichtungen eine oder mehrere Klapperschutzvorrichtungen umfassen, die sich zwischen dem Photovoltaiklaminat und der einen oder den mehreren Verbindungsvorrichtungen, der Grundplatte und der einen oder den mehreren Verbindungsvorrichtungen, dem Photovoltaiklaminat und der Grundplatte oder einer Kombination davon erstrecken.

10. Photovoltaikmodul nach Anspruch 9, wobei die Grundplatte mehrere Verstärkungsrippen umfasst, die eine Reihe von miteinander verbundenen geschlossenen Mustern, mehrere aneinander angrenzend angeordnete geschlossene Muster, mehrere teilweise miteinander verbundene Muster durch die obere Fläche und/oder untere Fläche oder eine Kombination davon sind, und die Verstärkungsrippen im Wesentlichen ähnliche sich wiederholende Strukturen, symmetrisch, asymmetrisch, ein Kreis, Dreieck, ein Polygon, eine Raute, ein Fünfeck, Sechseck, Siebeneck, Achteck, Neuneck, Zehneck, ein Hunderteck oder eine Kombination davon sind, sodass eine Reihe von Verstärkungsrippen im Wesentlichen die obere Fläche oder die untere Fläche der Grundplatte abdecken.

11. Photovoltaikmodul nach einem der Ansprüche 9 bis 10, wobei die Grundplatte Fasern in der oberen Fläche oder der unteren Fläche zwischen jeder der einen oder mehreren Verstärkungsrippen umfasst, die im Allgemeinen entlang einer Flussrichtung eines Polymergemischs ausgerichtet sind, das die Grundplatte bildet, und
wobei die Fasern in den mehreren Verstärkungsrippen entlang einer Richtung der mehreren Verstärkungsrippen; normal zu der oberen Fläche, normal zu der unteren Fläche oder beiden in den Verstärkungsrippen; oder eine Kombination von beidem ausgerichtet sind, sodass die Ausrichtung der Fasern in den mehreren Verstärkungsrippen anders ist als die Ausrichtung der Fasern in der oberen Fläche oder der unteren Fläche.

12. Photovoltaikmodul nach einem der vorhergehenden Ansprüche, wobei Kanten und Seiten des Photovoltaiklaminats im Wesentlichen abgedichtet sind, sodass das Photovoltaiklaminat undurchdringlich für Flüssigkeiten ist, wenn es nicht mit der Grundplatte verbunden ist.

13. Photovoltaikmodul nach einem der vorhergehenden Ansprüche, wobei die Grundplatte einen Verbindungskanal in entgegengesetzten Kantenbereichen der Grundplatte umfasst, die jeweils einen Verbinder des Photovoltaiklaminats aufnehmen und beim Herstellen einer elektrischen Verbindung unterstützen.

14. Photovoltaikmodul nach einem der vorhergehenden Ansprüche, wobei die Grundplatte eine oder mehrere Verbindungsrippen umfasst, die sich um die eine oder mehreren Verbindungsaussparungen erstrecken.

15. Photovoltaikmodul nach einem der vorhergehenden Ansprüche, wobei sich der eine oder die mehreren Verbindungshaken von einer Unterseite des Trägerabschnitts derart erstrecken, dass, wenn das Photovoltaikmodul mit dem einen oder den mehreren angrenzenden Photovoltaikmodulen verbunden ist, sich jeder des einen oder der mehreren Verbindungshaken durch die eine oder mehreren Verbindungsaussparungen des einen oder der mehreren angrenzenden Photovoltaikmodule und in Kontakt mit einer Unterseite jedes des einen oder der mehreren Photovoltaikmodule erstreckt.

## Revendications

1. Module photovoltaïque comprenant :
une plaque de base comportant :
une partie de support comportant un ou plusieurs crochets de raccordement et
une partie de chevauchement comportant une ou plusieurs encoches de raccordement ; et
un stratifié photovoltaïque qui est raccordé à la plaque de base ;
le module photovoltaïque étant configuré pour être directement raccordé à une structure de couverture et assurer des fonctions de couverture ;
le stratifié photovoltaïque étant raccordé à la partie de support et le stratifié photovoltaïque pouvant être retiré de la partie de support sans endommager la plaque de base, et la partie de chevauchement étant configurée pour être au moins partiellement recouverte par un ou plusieurs modules photovoltaïques adjacents ;
un ou plusieurs modules photovoltaïques adjacents comportant un ou plusieurs crochets de raccordement qui s'étendent à travers la ou les encoches de raccordement dans la partie de chevauchement de telle sorte que le ou les modules photovoltaïques adjacents sont raccordés à la plaque de base ; et
la plaque de base conservant ses fonctions de couverture quand le stratifié photovoltaïque est retiré.

2. Module photovoltaïque de la revendication 1, dans lequel le stratifié photovoltaïque peut être retiré de la plaque de base sans endommager le stratifié photovoltaïque.

3. Module photovoltaïque de l'une quelconque des revendications précédentes, dans lequel la plaque de base comporte un ou plusieurs dispositifs de raccordement le long d'au moins deux bords de la plaque de base qui raccordent le stratifié photovoltaïque à la plaque de base.

4. Module photovoltaïque de la revendication 3, dans lequel le ou les dispositifs de raccordement sont configurés de telle sorte que le stratifié photovoltaïque est retenu à l'intérieur de la plaque de base par le ou les dispositifs de raccordement quand la plaque de base est soumise à des forces de levage mécanique et/ou de soulèvement par le vent.

5. Module photovoltaïque de la revendication 3 ou la revendication 4, dans lequel le ou les dispositifs de raccordement sont moulés d'une seule pièce à l'intérieur de la plaque de base.

6. Module photovoltaïque de la revendication 3 ou la revendication 4, dans lequel le ou les dispositifs de raccordement sont distincts du stratifié photovoltaïque et de la plaque de base et le ou les dispositifs de raccordement se raccordent de façon fixe à la plaque de base de telle sorte que le stratifié photovoltaïque est raccordé de façon fixe à la plaque de base.

7. Module photovoltaïque de l'une quelconque des revendications précédentes, dans lequel la plaque de base s'étend au-dessus d'une quantité suffisante de chaque bord du stratifié photovoltaïque de telle sorte que la plaque de base protège les bords du stratifié photovoltaïque d'un endommagement.

8. Module photovoltaïque de l'une quelconque des revendications précédentes dans lequel, quand le stratifié photovoltaïque est raccordé à la plaque de base, le stratifié photovoltaïque et la plaque de base restent découplés de telle sorte que la plaque de base et le stratifié photovoltaïque sont libres de se dilater et se contracter indépendamment l'un de l'autre.

9. Module photovoltaïque de l'une quelconque des revendications 2 à 7, dans lequel le ou les dispositifs de raccordement comportent un ou plusieurs dispositifs de prévention des vibrations qui s'étendent entre le stratifié photovoltaïque et le ou les dispositifs de raccordement, la plaque de base et le ou les dispositifs de raccordement, le stratifié photovoltaïque et la plaque de base, ou une combinaison de ceux-ci.

10. Module photovoltaïque de la revendication 9, dans lequel la plaque de base comporte une pluralité de nervures de renforcement qui sont une série de motifs fermés interconnectés, une pluralité de motifs fermés situés les uns à côté des autres, une pluralité de motifs partiellement interconnectés à travers la surface supérieure et/ou la surface inférieure, ou une combinaison de ceux-ci, et les nervures de renforcement sont des structures répétitives sensiblement similaires, symétriques, asymétriques, un cercle, un triangle, un polygone, un losange, un pentagone, un hexagone, un heptagone, un octogone, un nonagone, un décagone, un hectogone, ou une combinaison de ceux-ci, de telle sorte qu'une série de nervures de renforcement recouvre en grande partie la surface supérieure ou la surface inférieure de la plaque de base.

11. Module photovoltaïque de l'une quelconque des revendications 9 à 10, dans lequel la plaque de base comporte des fibres dans la surface supérieure ou la surface inférieure entre chacune de la ou des nervures de renforcement qui sont généralement orientées le long d'une direction d'écoulement d'une composition polymère qui forme la plaque de base et
dans lequel les fibres dans la pluralité de nervures de renforcement sont orientées le long d'une direction de la pluralité de nervures de renforcement ; perpendiculairement à la surface supérieure, perpendiculairement à la surface inférieure, ou les deux, à l'intérieur des nervures de renforcement ; ou une combinaison des deux, de telle sorte que l'orientation des fibres dans la pluralité de nervures de renforcement est différente de l'orientation des fibres dans la surface supérieure ou la surface inférieure.

12. Module photovoltaïque de l'une quelconque des revendications précédentes, dans lequel les bords et les côtés du stratifié photovoltaïque sont sensiblement scellés de telle sorte que le stratifié photovoltaïque est étanche aux fluides lorsqu'il n'est pas raccordé à la plaque de base.

13. Module photovoltaïque de l'une quelconque des revendications précédentes, dans lequel la plaque de base comporte un canal de connecteur dans des régions de bord opposées de la plaque de base qui reçoivent chacun un connecteur du stratifié photovoltaïque et facilite la formation d'un raccordement électrique.

14. Module photovoltaïque de l'une quelconque des revendications précédentes, dans lequel la plaque de base comporte une ou plusieurs nervures de raccordement qui s'étendent autour de la ou des encoches de raccordement.

15. Module photovoltaïque de l'une quelconque des revendications précédentes, dans lequel le ou les crochets de raccordement s'étendent depuis un côté inférieur de la partie de support de telle sorte que, quand le module photovoltaïque est raccordé au(x) module(s) photovoltaïque(s) adjacent(s), le ou chacun des crochets de raccordement s'étend à travers la ou les encoches de raccordement du ou des modules photovoltaïques adjacents et en contact avec un côté inférieur du ou de chacun des modules photovoltaïques.
